# EUROPÄISCHE PATENTSCHRIFT

(11) **EP 0 937 615 B1**
(45) Veröffentlichungstag und Bekanntmachung des Hinweises auf die Patenterteilung: **06.07.2011**
(21) Anmeldenummer: 99102173.4
(22) Anmeldetag: 03.02.1999
(51) Int. Cl.: B60T 8/17

(54) **Sensorsystem und Verfahren für Überwachung/Messung des Kraftschlusses eines Fahrzeugreifens mit der Fahrbahn und weiterer physikalischer Daten des Reifens**
Sensor system and procedure for monitoring/measuring vehicle tyre adhesion on a surface and other physical data of the tyre
Système de capteur et procédé pour surveiller/mesurer l'adhérence d'un pneu de véhicule avec la piste de roulage et autres données physiques du pneu

(30) Priorität: 19.02.1998 DE 19807004
(43) Veröffentlichungstag der Anmeldung: 25.08.1999
(73) Patentinhaber: Continental Automotive GmbH, 30165 Hannover (DE)
(72) Erfinder: Reindl, Leonhard, Dr., 83071 Stephanskirchen (DE); Bulst, Wolf-Eckhart, 81739 München (DE); Magori, Valentin, Dr., 81539 München (DE); Pohl, Alfred, Dr., 2130 Mistelbach (AT); Seifert, Franz, 01170 Wien (AT)

(56) Entgegenhaltungen:
- EP-A- 0 351 997
- EP-A- 0 763 437
- DE-A- 3 937 966
- DE-A- 19 620 581

## Beschreibung

.

Von außerordentlicher Bedeutung ist beim Betrieb eines Kraftfahrzeugs der momentane Kraftschluß, mit dem ein Fahrzeugrad auf der Fahrbahn abrollt. Nicht nur zur Übertragung der Antriebsleistung und zur Sicherstellung ausreichenden Bremsvermögens, sondern auch für jegliche Lenkmanöver und bloßes Abrollen auf z.B. seitlich schräg geneigter Fahrbahn kommt es darauf an, daß für sicheres Beherrschen aller dieser Umstände stets der aktuell erforderliche Kraftschluß gewährleistet ist. Ein wichtiger Gesichtspunkt dabei ist, daß ein einmal wegen mangelnden Kraftschlusses ins Gleiten geratenes Fahrzeugrad wegen der dann herrschenden wesentlich geringeren gleitenden Reibung zu verhängnisvollen Folgen führen kann. Somit ist es für den Betrieb eines Fahrzeugs von eminenter Bedeutung, möglichst zeitig insbesondere vor Übergang in die gleitende Reibung angezeigt zu bekommen, daß die Grenze der notwendigen Haftreibung, d.h. die Grenze des Kraftschlusses zwischen dem Rad bzw. Fahrzeugreifen und der Fahrbahn, augenblicklich nahezu oder schon vollends erreicht ist. Mit einer auf eine solche Warnung folgenden sofortigen, ggfs. sogar automatisch gesteuerten Reaktion können dann gefährliche Situationen gemeistert werden.

Um dieses Ziel zu erreichen, sind Verfahren vorgeschlagen worden, mit denen indirekt aus dem meßtechnisch erfaßten Verhalten des Reifens eines rollenden Rades auf den momentanen Kraftschluß mit der Fahrbahn geschlossen wird. Das Ansprechen des ABS tritt erst beim Bremsen ein und läßt nur erkennen, daß man sich schon längst auf z. B. vereister Fahrbahn befindet. Zum Beispiel mit einem Fahrzeug mit permanentem Allradantrieb ist insbesondere bei Geradeausfahrt und maßvoller Fahrtgeschwindigkeit selbst eine totale Vereisung der Fahrbahnoberfläche erst beim Bremsen zu erkennen, was dann leider meist zu spät ist.

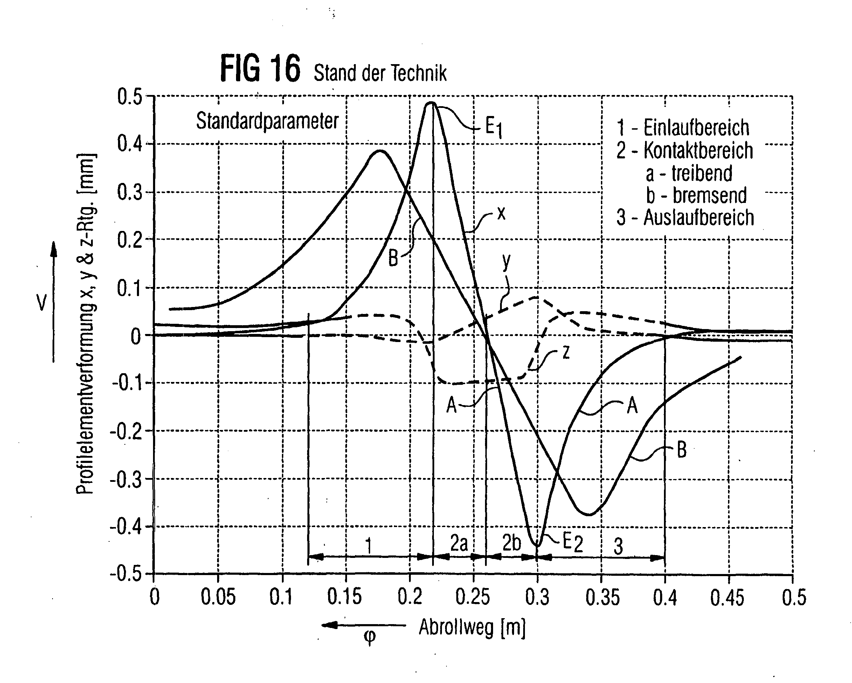

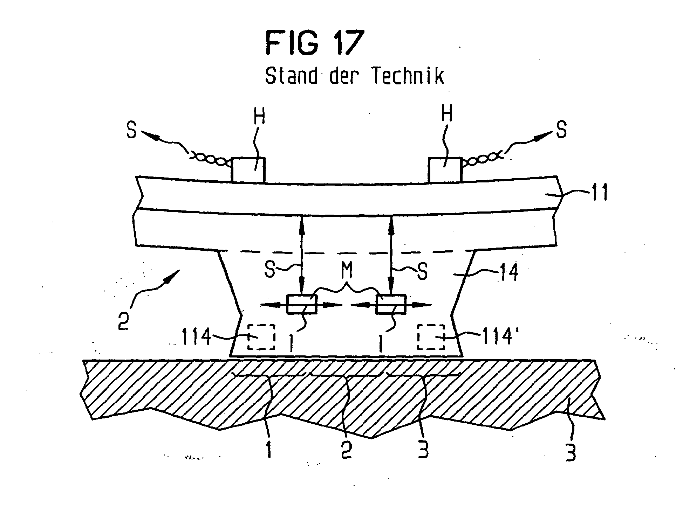

Schon vor nahezu vier Jahrzehnten (ATZ, 63 (1961) S. 33-40) ist die Verformungsmessung an Kraftfahrzeugreifen mittels spezieller Dehnungsmesser vorgenommen worden. Ein Verfahren und auch eine Vorrichtung zur Bestimmung der Kraftschlußverhältnisse zwischen Fahrzeugreifen und Fahrbahn sind in der DE-C-3937966 (1989) beschrieben. Mit einer solchen Vorrichtung ermittelte Kurvendiagramme sind in der DE-A-4242726 (1992) angegeben, die einem Verfahren zum Erkennen von Aquaplaning eines Fahrzeugreifens dienen. Zu einem (auch anderwärtig veröffentlichten) Kurvendiagramm (Figur 16) des Ablaufens eines Reifens 2 auf der Fahrbahn 3 sei darauf hingewiesen, daß die an einem augenblicklich auf der Fahrbahn aufliegenden Profilelement 14 des Protektors des Reifens - siehe dazu die Figur 17 - bei Ablauf auf trockener Fahrbahn auftretenden Verformungen V einen Verlauf gemäß der Kurve A haben mit einem in Laufrichtung ϕ (= x-Komponente des Kraftschlusses) des Reifens ersten Bereich 1, in dem Volumenelemente 114 des Profilelements 14 eine Beschleunigung und entsprechende Volumenelemente 114' in einem dritten Bereich 3 eine Verzögerung ihrer Bewegung in Laufrichtung erfahren. Der zweite (Zwischen-)Bereich 2 ist ein Ubergangsbereich zwischen Beschleunigung und Verzögerung, in dem die Kurve A der Figur 16 einen steilen Abfall zeigt. Diese bekannten Meßergebnisse zeigen (für noch nicht bereits eingetretenes Aquaplaning) einen praktisch gleichmäßigen, monoton verlaufenden (negativ) steilen Abfall der Kurve zwischen dem Extremwert des ersten Bereichs und demjenigen des dritten Bereichs. Die Kurve B zeigt ein Ergebnis auf nasser Fahrbahn. Die Kurve für die Querkomponente y des Kraftschlusses ist gestrichelt eingetragen.

Es sei hier auch noch kurzgefaßt die (aus den beiden letztgenannten Druckschriften) bekannte Meßeinrichtung beschrieben. Der für diese Messungen vorgesehene Reifen 2 hat in einem jeweiligen ausgewählten Profilelement 14 notwendigerweise in einem gewissen Abstand s entfernt von der Karkasse 11 eine Anzahl Permanentmagnete M einvulkanisiert. Ausgehend von diesen Magneten wird mittels Hall-Generatoren H eine laterale ±1 Positionsveränderung eines jeweiligen der Magneten, nämlich abhängig von der fahrtbedingt vorliegenden Verformung des Profilelements registriert. Da die gewählten Positionen der Hall-Generatoren konstruktionsgemäß unbeeinflußt sind von den Verformungen des Profilelements lassen sich also diese lateralen Positionsveränderungen gegenüber im wesentlichen der Karkasse auch quantitativ messen. Um das mit den Hall-Generatoren erzeugte Meßsignal (Figur 16) in die im Fahrzeug befindliche Auswerteeinrichtung übertragen zu können, ist eine induktive Signalübertragung erforderlich, nämlich von dem im rotierenden Rad positionierten Transponder/Sender S mit seiner Antenne zu dieser Auswerteeinrichtung. Erwähnt sei, daß ein solcher Transponder bekanntermaßen mit elektrischer Energie mit einer elektrischen Mindestspannung zu speisen ist. Im Versuchsfall kann dies mittels im Reifen eingebauter elektrischer Batterie oder mittels Übertragung über Schleifringe realisiert werden. Eine Energieübertragung zur Speisung des Transponders auf dem Funkweg stößt u.a. auf das Problem insbesondere eine ausreichend hohe elektrische Spannung für den Betrieb des Transponders übertragen zu können. Auch ist für eine solche induktive Energieübertragung eine Antenne einer solchen Größe erforderlich, die in etwa gleich der zu überbrückenden Funkdistanz (Reichweite) ist. Eine weitere bekannte Energieeinspeisung ist die mittels eines Piezogenerators (DE-C-4402136).

Aufgabe der vorliegenden Erfindung ist es, eine Meßeinrichtung und ein Meßverfahren anzugeben, die/das noch weitere Verbesserungen hinsichtlich des Erkennens abnehmenden Kraftschlusses eines Reifens auf der Fahrbahn gewährleistet und Probleme der Realisierung solchen Erkennens und des Betriebs der Meßeinrichtung zu beheben, die der Stand der Technik insbesondere betreffend die Energiespeisung noch aufweist. Insbesondere soll die für dieses Erkennen einzusetzende Meßeinrichtung möglichst einfach und kostengünstig aufgebaut sein, dabei aber höchste Betriebssicherheit gewährleisten. Auch soll es ermöglicht sein, zu diesem Zwecke im/am Reifen anzubringende Elemente möglichst so positionieren zu können, daß sie im Fahrbetrieb weitestgehend geschützt, insbesondere nahe der Karkasse, angeordnet sein können.

Aus der EP 0 351 997 A2 ist bekannt für eine Sicherheitsvorrichtung für Reifen einen Funksensor an dem Ventil eines Reifens anzubringen. Der Funksensor wird von der Fahrzeugbatterie versorgt.

Aus der EP 0 763 437 A1 ist eine Reifendruck-Überwachungseinrichtung bekannt, welche eine zentrale Empfangseinrichtung aufweist. In den Reifen ist ein Sensor angeordnet, der ein Funktelegramm mit mehreren Bits mittels einer Amplitudenmodulation oder Frequenzmodulation übermittelt.

Aus der DE 196 20 581 A1 ist ein externer Sensor bekannt, der anhand einer Verformung eines Reifens von dem Reifen auf die Fahrbahn übertragene Momente ermittelt.

Diese Aufgabe wird mit den Merkmalen der Patentansprüche gelöst und weitere Ausgestaltungen und Weiterbildungen gehen aus Unteransprüchen hervor.

Mit wenigen Worten umrissen, besteht die Erfindung darin, einen solchen Meßsensor auszuwählen, der seinem Wirkungsprinzip nach für die bei der vorliegenden Problematik bestehenden Randbedingungen besonders günstig ist. Dies ist hier der in der nachfolgenden Beschreibung noch näher definierte und erläuterte Funksensor. Eine Weiterbildung der Erfindung besteht darin, den Kraftschluß des Reifens auf der Fahrbahn aus dem im Reifen auftretenden Kraftfluß zu ermitteln. Die Auswahl des Sensors ist auch darauf ausgerichtet, daß dieser Meßsignale in äußerst rascher zeitlicher Folge auszuführen und abzugeben vermag. Der erfindungsgemäß verwendete Sensor kann, wie dies ebenfalls noch weiter erörtert wird, in dem Reifenaufbau nahe der Karkasse angeordnet sein, wo er optimal geschützt ist, wo aber praktisch keine laterale Bewegung mehr zu messen ist. Insbesondere kann bei Erfindung der Sensor nicht mehr innerhalb eines Profilelements positioniert, das im Verlauf der Abnutzung des Reifens abgetragen wird. Mit dieser bevorzugten Anordnung des Sensors lassen sich auch Temperatureinflüsse unerwünschter Art auf den Sensor weitgehend vermeiden.

Erfindungsgemäß ist - im nachfolgenden ins einzelne gehend ausgeführt - ein sogenannter Funksensor vorgesehen. Gemäß der für den Begriff "Funksensor" für die Erfindung geltenden Definition handelt es sich u.a. um ein elektronisch arbeitendes Bauelement, das diesem auf dem Funkwege impulsweise zugeführte Abfrageenergie zu speichern vermag und diese aufgespeicherte elektrische Energie, nun mit einer Meßsignal-Information verändert, derart zeitverzögert zurückzufunken vermag, daß die darin enthaltene Signalinformation (dann vom Abfrageimpuls ungestört) auszuwerten ist. Dabei läuft hier dieser Prozeß des Empfangs, Speicherns und zeitverzögerten Zurückfunkens - einmal abgesehen von Sonderfällen - innerhalb eines Zeitintervalles von etwa 1 bis 10 Mikrosekunden ab. Ein solcher Sensor kann mit dementsprechend rasch aufeinanderfolgendem Abfragen von Meßwerten betrieben werden. Dieser hier definierte Funksensor hat dazu die Eigenschaft, physikalische Meßgrößen erfassen zu können. Im vorliegenden Falle sind dies hier mechanische Kräfte und mechanische Dehnungen. Es können dies aber auch die Temperatur, ein Druck, die Reifenabnutzung, Schwingungen und dgl. sein. Ein solcher Funksensor kann je nach seiner Ausführung solche Größen direkt/unmittelbar messen oder er kann mit entsprechendem Zusatz versehen für solche Messungen ausgestattet sein. Dies sind die Fälle, in denen dieser Zusatz auf die zu messende nicht-elektrische physikalische Größe anspricht und diese in ein elektrisches Signal umsetzt, das vom Sensor auf dem Funkweg übertragen wird.

Im Sinne der Erfindung zu verwendende Funksensoren in der bevorzugten Ausführung nach dem Prinzip eines Oberflächenwellen-(Bau-)Elements sind in den Druckschriften DE-A-4200076, DE-A-4413211, WO96/33423, DE-A-19535549 sowie DE-A-19535542 ins einzelne gehend beschrieben. Die erstgenannte Druckschrift betrifft die spezielle Ausführung als Oberflächenwellen-Element, das so ausgeführt ist und auch so verwendet werden kann, daß es nicht nur den angegebenen physikalischen Prozeß der Speicherung auszuführen vermag, sondern es sind dort auch Beispiele zur direkten Messung von nichtelektrischen physikalischen Größen angegeben. Die weiteren Druckschriften betreffen Funksensoren-Typen, die als Energiespeicher zum einen als Laufzeitelemente, zum anderen als resonante Elemente ausgeführt sind und mit denen entweder direkt oder mit entsprechenden Zusätzen gekoppelt die physikalischen Größen erfaßt werden. Diese Funksensoren enthalten also bevorzugt Oberflächenwellen-Bauelemente (die hier definitionsgemäß auch solche mit Volumenwellen, Lambwellen und dgl. einschließen), sie können aber auch solche mit anderen Energiespeichern mit hoher Güte(z.B. L-C-Kreise, Schwingquarze und dgl.) sein.

Ein solcher Funksensor benötigt keine Zufuhr sonstiger speisender elektrischer Versorgungsenergie, wie dies im Falle der Verwendung eines Transponders unabdingbar ist. Insbesondere spielt bei der Erfindung der Umstand keinerlei Rolle, daß es zumindest schwierig ist, auf dem Funkweg elektrische Spannung einer solchen Höhe zu übertragen, die zur Aufrechterhaltung des Betriebs einer Elektronikschaltung (eines Transponders) unabdingbar ist.

Mit einem solchen Oberflächenwellen-Funksensor läßt sich auch zusätzlich noch eine Identifikation des Reifens (nach Art eines ID-Tags) ausführen. Eine solche Maßnahme kann z.B. dazu dienen, dem identifizierten Reifen(-Typ) entsprechend die Auswertung/Bewertung der jeweils festgestellten Meßwerte z.B. programmiert anzupassen.

Im oben beschriebenen Stand der Technik ist vorgesehen, die laterale Positionsveränderung 1 von im Profilelement angeordneten Markerelementen M zu messen und auszuwerten. Um mehr als infinitisimale Lateralbewegungen zu haben, ist es im Stand der Technik zwangsläufig erforderlich, die Sensoren (dort Hall-Generatoren) orthogonal zur Lateralbewegung der Marker (Magnete) in einem gewissen Abstand s von diesen anzuordnen. Laterale Bewegungen in dieser Weise meßbarer Größe treten im wesentlichen auch nur im Profilelement auf, so daß dies im Stand der Technik der Ort der Meßwerterfassung ist. Derartiges kann auch bei der Erfindung ausgeführt werden. Bevorzugt ist dagegen für die Erfindung, auftretende Kräfte oder durch diese verursachte Dehnungen, Stauchungen oder Scherungen im Material meßtechnisch zu erfassen, insbesondere den Kraftfluß innerhalb des Protektors und ggfs. sogar innerhalb der Karkasse mit dem erfindungsgemäß ausgewählten Sensor zu messen. Diese Messung kann sogar auf einen (der geringen Größe des Sensors entsprechend) in Annäherung infinitisimalen Volumenbereich des Protektors sogar auch ortsaufgelöst beschränkt vorgenommen werden. Es können also mit der Erfindung lokal auftretende Kraftflußverhältnisse erfaßt werden, wie auch noch nachfolgend näher erörtert wird. Insbesondere kann der erfindungsgemäß vorgesehene Sensor im Protektor außerhalb des Bereichs der Profilelemente angeordnet, also auch in einen profillosen Reifen eingebaut sein. Vorzugsweise kann bei der Erfindung der Sensor im Protektor (in der Radialrichtung des Reifens gesehen) zwischen einer Profilrille, insbesondere einer Querrille des Profils und der Karkasse angeordnet sein. Damit kann insbesondere der Kraftfluß im Protektor zwischen zwei aufeinanderfolgenden Profilelementen (durch eine Querrille voneinander getrennt) gemessen werden.

Weitere Erläuterungen der Erfindung werden anhand der Beschreibung zu Figuren gegeben, die ebenfalls Offenbarungsinhalt zur Erfindung sind.
Figur 1 zeigt eine erste Ausführungsform und
Figur 1a dazu eine Meßkurve.
Figur 2 zeigt eine zweite Ausführungsform und
Figur 3 dazu die Meßkurve.
Figur 4 zeigt eine Weiterbildung zu Figur 2.
Fig. 5a-d zeigen weitere Positionierungsbeispiele.
Fig. 6a, b zeigen weitere Positionierungsbeispiele.
Figur 7 zeigt einen Oberflächenwellen-Funksensor.
Figur 7a, b zeigen eine alternative Ausführungsform zu Fig.7.
Figuren 8a-d zeigen spezielle Meßvorrichtungen.
Figur 9 zeigt eine bekannte Meßvorrichtung mit erfindungsgemäßem Funksensor.
Figur 10 zeigt eine Alternative zur Figur 9.
Figur 11 zeigt einen Schwingungssensor.
Figur 12 zeigt eine Anordnung mit mehreren Sensoren.
Figur 13 zeigt eine Abfrageeinheit.
Figur 14 zeigt eine spezielle Schaltung für Abfragen.
Figur 15a-c zeigen Beispiele für Abfragesignale.
Figur 16 zeigt ein bekanntes Kurvendiagramm.
Figur 17 zeigt eine bekannte Meßeinrichtung.

Der Funksensor gemäß der Wahl und Definition nach der Erfindung ist geeignet, außerordentlich rasch (z.B. alle 10 Mikrosekunden) hintereinander Meßwerte liefern zu können. Dies hat zu einer im nachfolgenden beschriebenen, überraschenden Beobachtung/Erkenntnis geführt.

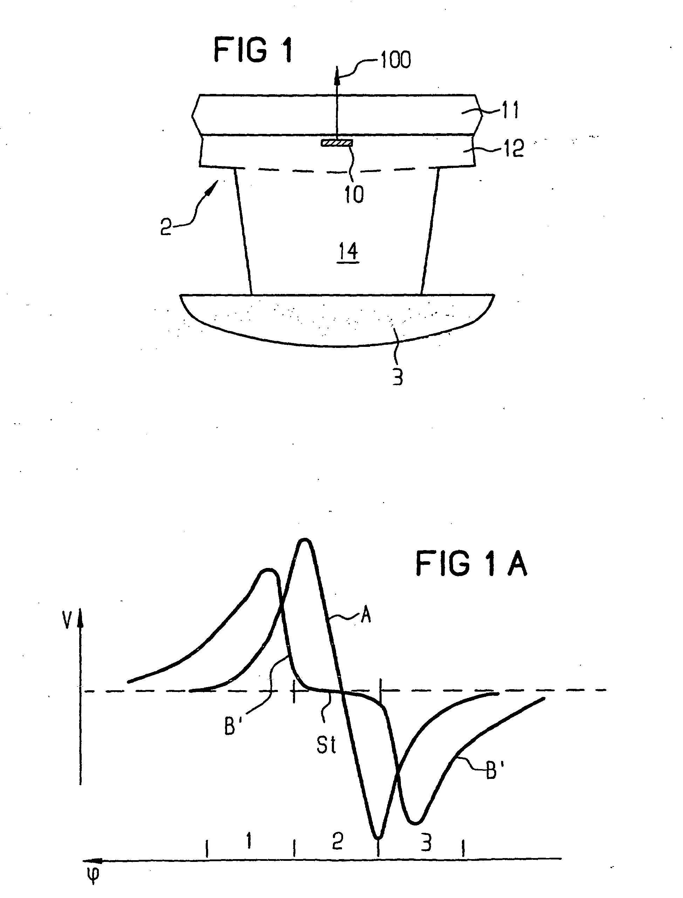

Die Figur 1 zeigt einen erfindungsgemäßen Einbau eines nach der Erfindung ausgewählten Funksensors 10 im Bereich eines Profilelements 14. Vom Stand der Technik unterscheidet sich dies darin, daß allein dieser Sensor 10 ohne wie im Stand der Technik dazugehörige korrespondierende Bezugselemente (dort die Hall-Generatoren) auskommt. Nicht zuletzt ist die erfindungsgemäße Wahl der Art des Sensors und dieser Einbau im Reifen 2 nach Figur 1 dahingehend vorteilhaft, daß keine hohen Anforderungen an die Exaktheit der Einbauposition zu stellen sind, weil hier der Sensor als Meßwerteaufnehmer in sich abgeschlossen wirkend ist. Dieser Umstand erlaubt es, den Sensor 10 als Kraftsensor auch nahe der Karkasse 11 einzubauen, wo nur noch Kräfte herrschen aber kaum eine nach dem Stand der Technik meßbare laterale Positionsveränderung 1 im Reifenaufbau auftritt. Mit 100 ist eine Antenne des Sensors 10 bezeichnet. Sie ist hier dem Prinzip nach dargestellt.

Es ist oben im Zusammenhang mit der Figur 16 auf die (negative) Steigung der Kurve A im zweiten Bereich 2 hingewiesen worden. Im Stand der Technik ist das Maß der Verminderung (= Übergang in die Kurve B) dieser dort festgestellten Steigung für eine Schlußfolgerung hinsichtlich schwindenden Kraftschlusses ausgewertet worden. Mit der mit der Erfindung jedoch möglich gewordenen sehr hohen zeitlichen Auflösung der Meßwertfolge wurde festgestellt, daß schon vor signifikanter Abnahme der Steigung der Kurve A zwischen den beiden Extremwerten E1 und E2 ein wie in Figur 1a gezeigter Kurvenverlauf B' bei beginnender Nässe/Vereisung zu erkennen ist, der schon vor Eintreten einer gefahrbringenden Kraftschlußminderung auftritt. Dieser stufenartige (St) Verlauf, der erst mit der Erfindung festgestellt wurde, ist ein Vorbote für eintretende Kraftschlußminderung. Das Auftreten dieser Stufe kann dementsprechend als Voraus-Warnung ausgewertet werden.

Es kann bei der Erfindung aber auch/zusätzlich die Steigung und/oder der Quotient der Steigungen vor und hinter der Stufe oder die Steigung der Stufe selbst ausgewertet werden.

Aus dem Abstand bzw. der Relation zwischen den hier gemessenen Werten E1 und E2 der Extrema kann die augenblickliche Belastung des Fahrzeugs ermittelt werden. Dies wird u.a. für die Steuerung des Bremsassistenten genutzt.

Bei der erfindungsgemäßen Verwendung eines Funksensors ist die Reichweite des Funksignals vergleichsweise wesentlich größer als bei der bekannten induktiven Signalübertragung. Die erfindungsgemäße Wahl eines Funksensors hat also auch den Vorteil, daß hinsichtlich der Anordnung von Sendeantenne und Empfangsantenne zueinander ohne weiteres auch größere Abstände zwischen der Antenne des Funksensors im Rad und der korrespondierenden Antenne am Fahrzeug vorliegen können. Insofern ist das System auch unabhängig vom Maß des Radeinschlages und/oder der Einfederung.

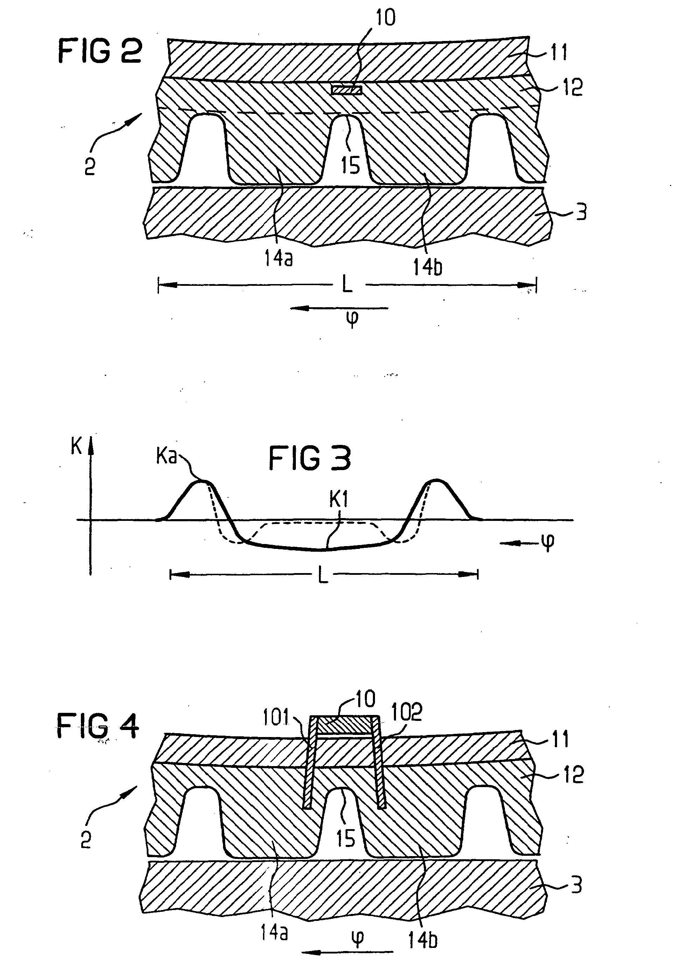

Die Figur 2 zeigt gemäß einer Alternative der Erfindung eine andere Position eines erfindungsgemäß ausgewählten Funksensors 10 innerhalb des Gummis des Protektors 12 nahe der Karkasse 11 des Reifens 2. Mit jeweils 14a, 14b sind zwei benachbarte Profilelemente des Reifens 2 bezeichnet, die augenblicklich auf der Fahrbahn 3 aufliegen. Der Sensor 10 ist also hier im Bereich einer Profilrille 15, hier einer Querrille, angeordnet. Mit dieser Position des Sensors 10 läßt sich der Kraftfluß messen, der innerhalb des Protektors 12 zwischen diesen beiden auf der Fahrbahn aufliegenden Profilelementen 14 auftritt. In dieser Position ist der Sensor gegen mechanische Beschädigungen gut geschützt, und zwar auch unabhängig vom Maß der Abnutzung des Profils des Reifens.

Die Figur 3 zeigt zur Figur 2 gehörig das jeweilige Maß des Kraftflusses K, aufgetragen über dem Drehwinkel ϕ des Rades, d.h. dem Fortschreiten des Ablaufs des Reifens 2 auf der Fahrbahn 3. Mit L ist die Latschlänge des Reifens auf der Fahrbahn eingetragen. Der dargestellte Kurvenverlauf K zeigt mit dem ausgezogenen Kurvenzug K1 das Sensorsignal, das bei einem guten Kraftschluß des Reifens auf der Fahrbahn zu erhalten ist. Die Kurve K2 (gestrichelt) zeigt den Kraftfluß bei geringerem Kraftschluß auf nasser Fahrbahn. In der Einlaufphase zum Latsch wird zunächst das Profilelement 14a in Richtung des Profilelements 14b verbogen, während das Profilelement 14b noch gerade steht. Zwischen diesen ergibt sich damit ein Druckkraftmaximum. Dann verbiegt sich auch das Profilelement 14b und diese Kraftspitze verschwindet. Kommt es dann etwa in der Mitte des Latsches zu der beobachteten Richtungsänderung der Deformation. Dann gibt es ein Zeitintervall, in dem die Deformation des Profilelements 14b derjenigen des Profilelements 14a nacheilt. Somit tritt im Bereich der Mitte die maximale Zugspannung im Bereich zwischen diesen beiden Profilelementen am Ort des Sensors 10 auf. Etwaige Antriebs- und Bremskräfte ergeben über den gesamten Latsch hinweg einen Gleichanteil bezüglich der Höhe der gemessenen Zugspannung.

Der Sensor 10, eingebaut in der in Figur 2 gezeigten Position, integriert über alle dort tangential im Reifen 2 übertragenen Kräfte, die teils vom Protektor 12 und teils von der zu einem gewissen Maß elastischen Karkasse 11 übertragen werden. Im Gegensatz zur Verformungsmessung im Profilelement ist diese Anordnung und Messung nach Figur 2 relativ unabhängig vom Maß der Reifenabnutzung. Es ergeben sich dabei auch geringere Unterschiede zwischen Reifen mit einerseits Sommerprofil und andererseits Winterprofil, die wahlweise an ein und demselben Fahrzeug mit ein und derselben Auswerte- und Bewertungseinrichtung benutzt werden. Da hier der Kraftfluß gemessen wird, ist der erfindungsgemäß verwendete Sensor auch für profillose Reifen verwendbar.

Die Figur 4 zeigt zur Figur 2 eine Weiterbildung mit einer Anordnung des Sensors 10 innerhalb des Reifens 2, bezogen auf die Karkasse 11. Wie dargestellt, besitzt dieser Sensor 10 als Zusatz zur Aufnahme und Weiterleitung von Kräften streifen- oder draht-/stabförmige Metallteile 101 und 102. Wie gezeigt, sind diese Metallteile 101, 102 im Reifen im Bereich jeweils einer Seite der Querrille 15 des Profils einvulkanisiert. Verformung der Profilelement 14a und 14b zueinander, d.h. beiderseits der Profilrille 15, wirken auf diese Metallteile 101 und 102 am Ort derselben im jeweiligen Profilelement 14. Diese Einwirkung auf die Metallteile wird auf den eigentlichen Meßteil des Sensors 10 übertragen, wie dies noch nachfolgend zu Ausführungsformen solcher Sensoren beschrieben ist.

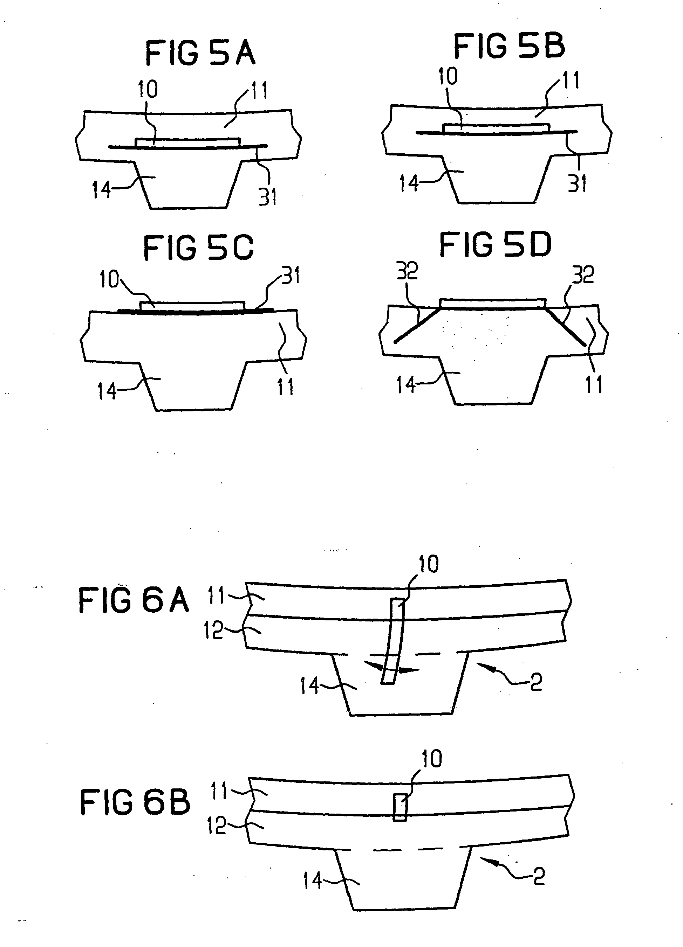

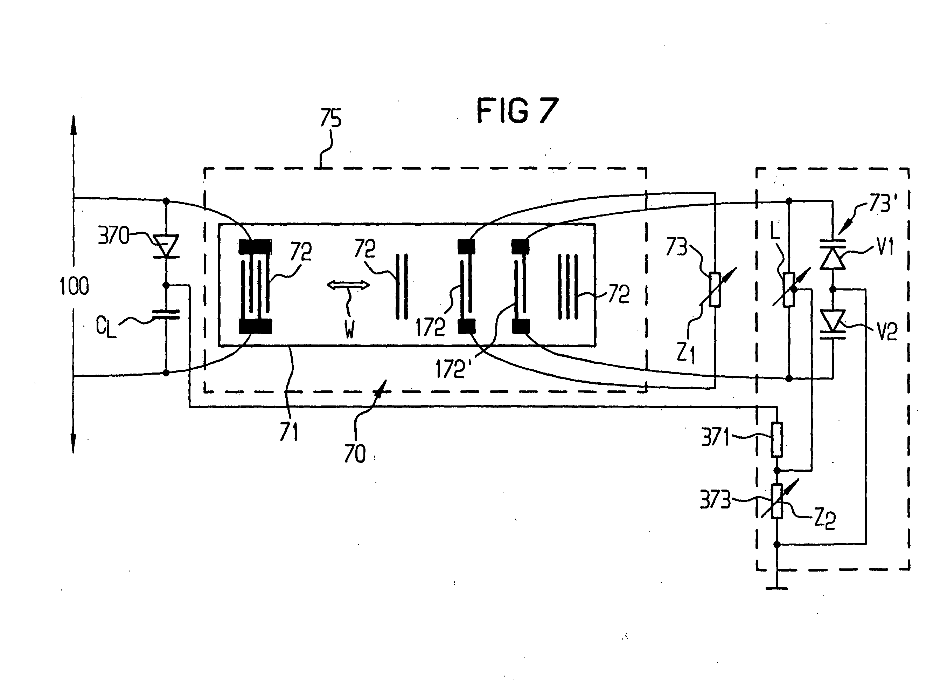

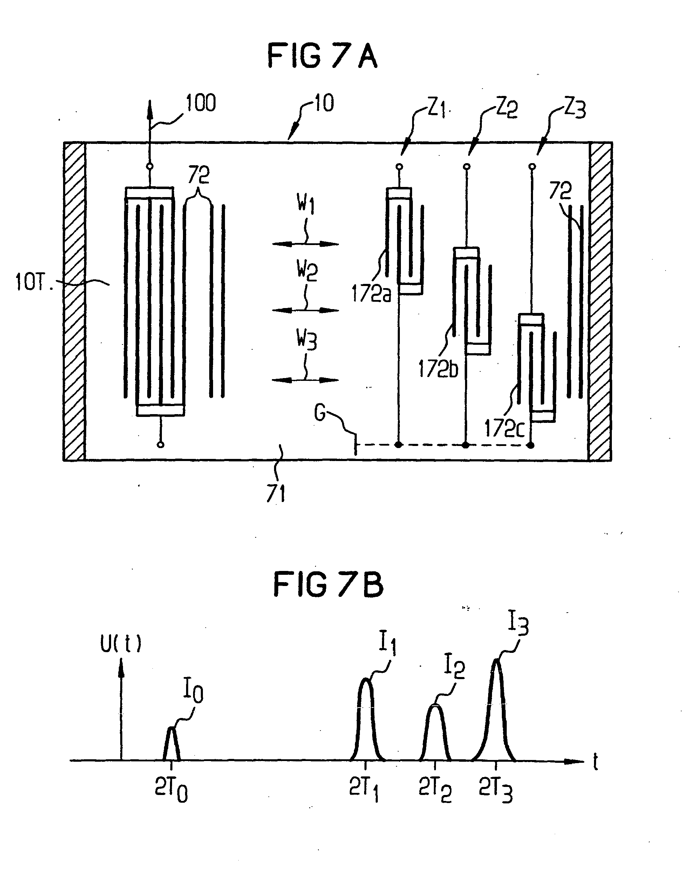

Die Figuren 5a bis 5d zeigen weitere Positionierungen eines erfindungsgemäßen Sensors 10. Da ein erfindungsgemäß verwendeter Funksensor nur minimale Meß-Auslenkung (Dehnung, Stauchung, Biegung etc.) hat, kann dieser sogar innerhalb der Karkasse 11 plaziert sein. Bei Verwendung eines Funksensors mit einem Zusatz, der die nicht elektrische zu messende physikalische Größe in eine elektrische Größe umsetzt, genügt es, diesen den eigentlichen Meßwert erfassenden Zusatz an der Meßstelle zu positionieren und der eigentliche Funksensor kann mit entsprechender Leitungsverbindung von diesem Ort auch etwas entfernt angeordnet sein. Zu solchen Ausführungen eines Funksensors mit einem den Meßwert umsetzenden Zusatz sei auch auf die noch zu beschreibende Figur 7 hingewiesen.

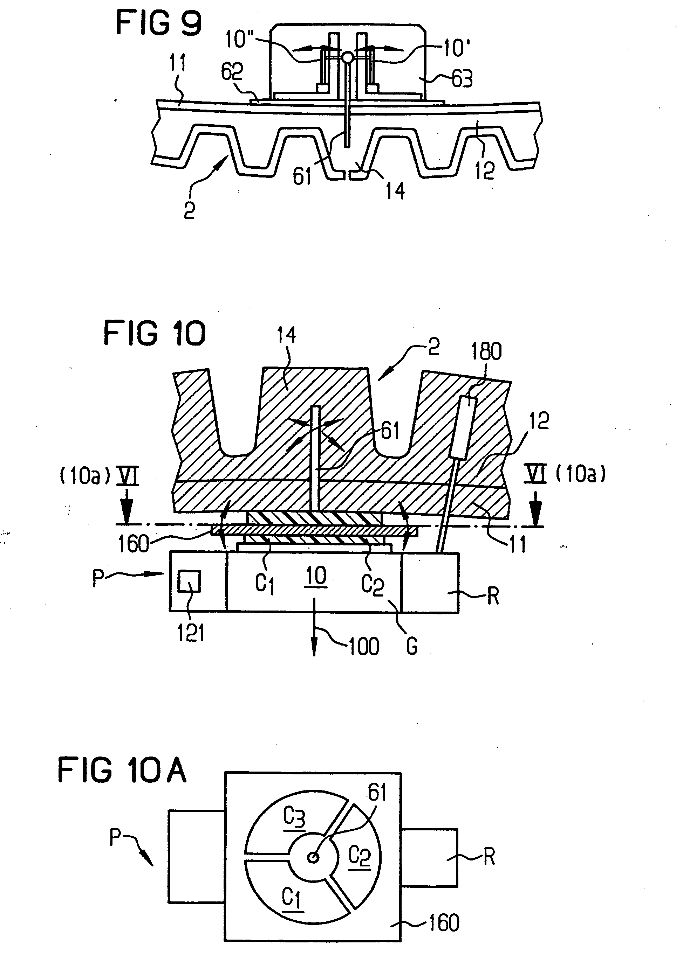

Benutzt man einen auf Biegung ansprechenden Funksensor in einer der Figuren 5a bis 5d gezeigten Positionierung (mit oder ohne die noch nachfolgend zur Figur 9 näher beschriebenen Kraftübertragungsbleche 31 bzw. 32) kann man bei nicht vorliegender Belastung im Reifen-Latsch zusätzlich aus der Wölbung der Lauffläche den Reifendruck messen.

Weitere Möglichkeiten der Kraftschlußmessung sind, den Kraftfluß mit an entsprechender Stelle angebrachtem Funksensor 10 oder dort positioniertem, diesem zugeordneten meßwertsensitivem Zusatz auch abseits des Profilbereichs z.B. an der Reifenseite oder auch im Bereich zwischen dem Reifen und der Felge/dem Felgenhorn zu messen oder den Kraftfluß aufgrund des auftretenden Kraftübergangs auch an der Achse oder anderen Antriebsteilen zu erfassen.

Ein Sensor 10 kann (etwa wie die Permanentmagneten im Stand der Technik) z.B. einvulkanisiert sein.

Im Vorangehenden ist von "einem" Sensor 10 die Rede. Entsprechend diesem einen Sensor kann eine mehr oder weniger große Anzahl solcher Sensoren auf den Umfang des Reifens, d.h. auf den umlaufenden Protektor, auf mehrere Profilelemente oder auf die Karkasse (entsprechend Figur 5) jeweils verteilt angeordnet vorgesehen sein. Durch entsprechende Wahl bzw. Ausgestaltung der Funksensoren hinsichtlich eines Antwortsignals mit zugeordneter Kodierung für den speziellen Sensor, können die vom jeweiligen Sensor zurückgefunkten Meßwertsignale eindeutig einem jeweiligen der Sensoren zugeordnet werden.

Der bzw. die mehreren im Reifen eingebauten Sensoren haben jeweils eine einzelne oder ggfs. auch eine gemeinsame Antenne 100. Diese kann/können z.B. in der Seitenwand des Reifens einvulkanisiert sein. Probleme einer geeigneten Positionierung einer solchen Antenne bestehen für die erfindungsgemäß vorgesehenen Funksensoren nicht, weil, für die Funksensoren typisch, trotz kleinster elektrischer Signalleistung diesen Funksensoren eine relativ große Reichweite zu eigen ist. Im Falle einer Karkasse mit Metallfäden (Metallgürtelreifen) ist darauf zu achten, daß auch nur möglicherweise auftretende Störung der Signalübertragung auf dem Funkwege ausgeschlossen ist.

Ein Funksensor als Oberflächenwellen-Bauelement hat im Regelfall eine nur geringe Größe im Millimeter-Bereich bis zu etwa 1 cm Länge als größter Abmessung. Mit einer solchen Größe des Sensors kann die Positionierung desselben an der gewünschten Stelle im Reifen problemlos realisiert werden. Es können mit einem solchen Sensor Kräfte, Dehnungen/Stauchungen, Scher-und Biegebewegungen auf kleinstem Raum, d.h. auf Volumenelemente, beschränkt gemessen werden.

Wie die Figuren 6a und 6b zeigen, können die erfindungsgemäß vorgesehenen Funksensoren 10 auch in einer zur Tangentialrichtung im wesentlichen orthogonalen Richtung ausgerichtet positioniert sein. Insbesondere mit einer Ausführung nach Figur 6a können die Kräfte im Protektor 12 bzw. in der Karkasse 11 als Biegeeinwirkung auf den Sensor 10 gemessen werden. Wird hier insbesondere bei der Ausführung nach Figur 6a ein Laufzeitsensor mit mehreren Reflektoren eingesetzt, so kann hier zusätzlich die vertikale Verteilung der Auslenkung im Protektor, insbesondere im Profilelement, gemessen werden. Der Sensor kann dabei an seinem einen Ende in der Karkasse fixiert sein.

Nachfolgend werden Erläuterungen zum Aufbau des eigentlichen Meßsensors gegeben, der bei der Erfindung ein wie definierter Funksensor ist.

Es ist bereits oben eine Definition für den Funksensor gegeben worden, nämlich daß es sich um ein elektronisches Bauelement handelt, das akkumulierende Speichereigenschaft für einen empfangenen Abfrage-Signalburst besitzt. Mit dieser gespeicherten Energie ist dieser Funksensor in der Lage (ohne weitere Energiezufuhr), ein Antwortsignal auf dem Funkweg zurückzusenden. Wichtige Beispiele solcher Funksensoren sind mit Oberflächenwellen, Volumenwellen und dgl. akustischen Wellen arbeitende Oberflächenwellen-Bauelemente wie sie u.a. aus den oben genannten Druckschriften bekannt sind. Ein wesentliches Charakteristikum derselben ist, daß das Antwortsignal zeitverzögert auf das Abfragesignal folgt, also durch dieses nicht gestört wird.

Solche Oberflächenwellen-Bauelemente können durch direkte Beeinflussung ihrer Eigenschaft, insbesondere der Ausbreitung der akustischen Welle, als direkt messende Sensoren für auch nicht elektrische physikalische Größen wie Kraft und Temperatur wirksam sein. Funksensoren mit Oberflächenwellen-Bauelement können aber auch so ausgeführt sein, daß sie mit wie schon erwähnten Zusätzen diese Meßfunktion ausführen. Insbesondere ist hierzu als Zusatz eine angeschlossene Impedanz zu nennen, die einen durch die zu messende physikalische Größe jeweils eingestellten Werte annimmt.

Die Figur 7 zeigt eine schematische Aufsicht eines auch impedanzbelastbaren Oberflächenwellen-Bauelements 70 des Sensors 10. Dieses ist im allgemeinen Falle ein Substratplättchen 71 aus piezoelektrischem Material, wie einkristallinem Lithiumniobat/-tantalat, Quarz oder dergleichen. Auch ferroelektrische flüssigkristalline Elastomere (FLCE) sind geeignet. Auf der Oberfläche des Substratplättchens sind für Oberflächenwellen-Elemente übliche (Interdigital-, Reflektor-) Elektrodenstrukturen 72 aufgebracht. Bekanntermaßen bestimmen außer den Materialeigenschaften vor allem das Design dieser Elektrodenstrukturen das generelle elektrische Hochfrequenzverhalten des Oberflächenwellen-Elements. Zum Beispiel eine durch Krafteinwirkung verursachte Dehnung, Verbiegung oder Verwindung des Substratplättchens ergibt im Frequenzverhalten oder dgl. entsprechende meßbare Veränderungen als vom Oberflächenwellen-Bauelement 70 direkt erfaßbares Meßsignal einer derartigen mechanischen Verformung des Plättchens.

Ein Funksensor mit einem Oberflächenwellen-Bauelement 70 hat in dieser oder für Bauelemente dieser Art ähnlichen Ausführung z.B. nur relativ geringe Abmessungen mit z.B. bis etwa 1 cm Länge. Dieser Umstand ermöglicht es, mit einem solchen Element Kräfte mit hoher Ortsauflösung zu erfassen. Es kann die Oberflächenwellenstruktur insbesondere mit ihren Reflektorstrukturen 72 so ausgeführt sein, daß sogar über diese Abmessung des Bauelements 70 hinweg ortsaufgelöst Kräfte innerhalb der Strukturlänge aufgelöst gemessen werden können.

Da die mit der Elektrodenstruktur versehene Oberfläche des Substratplättchens an Luft (oder ein Schutzgas) angrenzen muß, ist ein solches Substratplättchen üblicherweise in einem Gehäuse 75 mit entsprechenden elektrischen Zuleitungen eingebaut.

Die als reflektierender Wandler 172, 172' ausgeführte Struktur dient dem Anschluß einer Impedanz 73, 73' als wie oben beschriebener Zusatz für den Fall, daß das Oberflächenwellen-Bauelement des Funksensors 10 nicht direkt die zu messende physikalische Meßgröße erfaßt oder erfassen soll.

Die Verwendung eines impedanzbelasteten Oberflächenwellen-Elements nach Figur 7 bietet mehrere Vorteile. Man kann mehrere solche Wandler 172, 172' in dem Wellenausbreitungsweg W des Oberflächenwellen-Elements nach Figur 7 vorsehen und an diese verschiedene externe Impedanzen 73, 73' anschließen. Eine solche externe Impedanz verändert das Reflexionsverhalten des Wandlers 172 in Betrag und Phase. Die anzuschließenden Impedanzen können Kapazitäten, Induktivitäten und/oder Widerstände sein, die durch die Beeinflussung durch die zu messende physikalische Meßgröße eine Änderung ihres Impedanzwertes erfahren.

Sollten bei der Anwendung eines solchen impedanzbelasteten Funksensors Schwierigkeiten auftreten, die durch einen in den Impedanzen fließenden hochfrequenten Strom verursacht sind, können solche Schwierigkeiten durch Schaltungsmaßnahmen behoben werden. Für viele Anwendungen ist jedoch die Trennung des hochfrequenten Übertragungs- und Sensorsignals vom eigentlichen Meßwertaufnehmer-Signal von Vorteil. Dazu kann, wie die Figur 7 ebenfalls zeigt, einerseits aus der Antennenspannung durch Gleichrichtung 370 eine Gleichspannung gewonnen werden, die durch zur Arbeitspunkteinstellung 371 eines meßwert-sensitiven Bauelements 373 verwendet wird. Dieses ist die eigentliche belastende Impedanz für den reflektierenden Wandler 172'. Diese Impdedanz kann als Widerstand und auch als Kapazitätsdiode, als Feldeffekttransistor etc. ausgeführt sein. Die Arbeitspunkteinstellung und damit die Einstellung der reflexionsbestimmenden Impedanz 373 erfolgt somit mit Gleichspannung.

Die Meßgröße am Spannungsteiler 371/373 wird der Schaltung (73') zugeführt. Die der Meßgröße (373) entsprechende Gleichspannung liegt dort zwischen den Mittelanzapfungen der Induktivität 372 und den spannungsabhängig variablen Varakterdioden Va, Vb, und zwar hochfrequenz-entkoppelt. Dies erlaubt lange Leitungen 374 zwischen dieser Schaltung (mit den Varakterdioden) und der meßwert-sensitiven Impedanz 373. Hingegen sind die Leitungslängen zwischen den Varakterdioden und dem Wandler 172' des Bauelementes 70 kurz bemessen zu halten.

Wird ein solcher Funksensor (nach Figur 7) mit mehr als einem Wandler 172, 172' ausgerüstet, so können ihm entsprechend mehrere Impedanzen angeschlossen werden. Ein einzelner Funksensor kann somit Informationen über mehrere (mit den jeweiligen meßwert-sensitiven Impedanzen zu erfassende) physikalische Größen messen, z.B. Temperatur, Schwingung, Kraftschluß, Verschleiß und dgl., indem sein Oberflächenwellen-Element entsprechend viele reflektierende Wandler 172 aufweist, an die in gleicher Anzahl meß-sensitive Impedanzen angeschlossen sind.

Voranstehend sind Funksensoren mit Oberflächenwellen-Bauelementen beschrieben worden, mit denen direkte Messung und indirekte Messung ausgeführt werden kann. Die direkte Messung besteht darin, daß die Meßgröße unmittelbar auf insbesondere das Substratplättchen des Oberflächenwellen-Bauteils einwirkt. Die indirekte Messung ist die über eine wie ausführlich beschriebene Impedanzbelastung. Mit der Erfindung kann die Meßwerterfassung verschiedener Meßwertgrößen mit ein und demselben Funksensor mit dessen Oberflächenwellen-Bauelement zum einen Teil als direkte Messung und zum anderen Teil als indirekte Messung mit Impedanzbelastung ausgeführt werden. Zum Beispiel kann der Kraftfluß direkt mit dem Oberflächenwellen-Bauelement erfaßt werden. Weitere gewünschte Meßwerte, z.B. über den Reifendruck, über Schwingungen, über Temperaturwert und dgl. können dann z.B. am vom Ort des Funksensors entferntem Ort mit dort angeordneter meßsensitiver Impedanz (373) aufgenommen und dem Oberflächenwellen-Element über eine Leitung (374) zugeführt werden.

Die Figur 7a zeigt eine Ausführungsform eines Oberflächenwellen-Bauelements mit mehreren Spuren W1, W2, W3 für (im Gegensatz zur Figur 7) spurenweise getrennte Signalerfassung mit den reflektierenden Wandlern 172a, 172b und 172c für den Anschluß einer jeweiligen meßwert-sensitiven Impedanz, wie dies zur Figur 7 beschrieben ist. Die Figur 7c zeigt die Antwortsignale J1, J2, J3 auf das Abfragesignal J0. Die zeitliche Antwortfolge kennzeichnet den jeweiligen Wandler 172.

Im Voranstehenden ist die Detektion bzw. Messung einer jeweiligen Kraft bzw. eines Kraftflusses in im wesentlichen einer Richtung beschrieben, nämlich die durch die das gerichtete sensitive Vermögen des vorgesehenen Funksensors bzw. seines zur Meßwerterfassung vorgesehenen Zusatzes für die indirekte Messung gegeben ist.

Zur Messung von zwei oder noch mehr Kraftkomponenten kann man auch entsprechend mehrere solche Oberflächenwellen-Strukturanordnungen, z.B. auch auf ein und demselben Substrat, vorsehen, die in jeweils einer dieser Komponenten-Richtungen ausgerichtet wirksam sind.

Es kann mit zwei solchen Strukturen die Kräfteverteilung in der Fläche des Latsch vollständig erfaßt werden. Sofern die erwähnten Meßzusätze eines Funksensors zum Erfassen der Kräfte verschiedener Richtungen genutzt werden, gilt das Voranstehende für diese Meßzusätze des Sensors. Aus dem zeitlichen Verhalten der gemessenen Kräfte in Fahrtrichtung (x-Komponente) können auch Beschleunigungs- und Bremskräfte erfaßt werden. Gemessene Querkräfte (y-Komponente) können zur Erfassung des Kurvenverhaltens des Reifens herangezogen werden. Ist auch noch eine Messung der z-Komponente vorgesehen, so kann aus dieser ein Maß für den Reifen-Auflagedruck abgeleitet werden. Die Meßwerte der verschiedenen Richtungskomponenten können durch entsprechende an sich bekannte Maßnahmen voneinander unterschieden werden. Mit Laufzeit-Sensoren kann Zeitorthogonalität genutzt werden. Bei resonanten Sensoren können dazu die unterschiedlich hohen Resonanzfrequenzen benutzt werden. Dabei kann durch das Anregesignal der Abfrage der eine oder die mehreren Sensoren gemeinsam mit der Funkenergie geladen werden und nach dem Ende dieser Anregegung schwingen die Resonatoren mit ihrer jeweils eigenen Eigenfrequenz aus. Nach dem Empfang des über die Antenne zurückgefunkten Sensor-Summensignals können die einzelnen Resonanzstellen, z.B. durch Anwendung einer Fourier-Transformation oder höherwertige Auswerteroutinen, ermittelt werden. Auf die Betragswerte der Kräfte kann aus dem Maß der jeweiligen Frequenzänderung geschlossen werden. Werden z.B. dispersive Sensoren eingesetzt, so kann bei diesen die Sensitivität über die Dispersionsrate eingestellt werden.

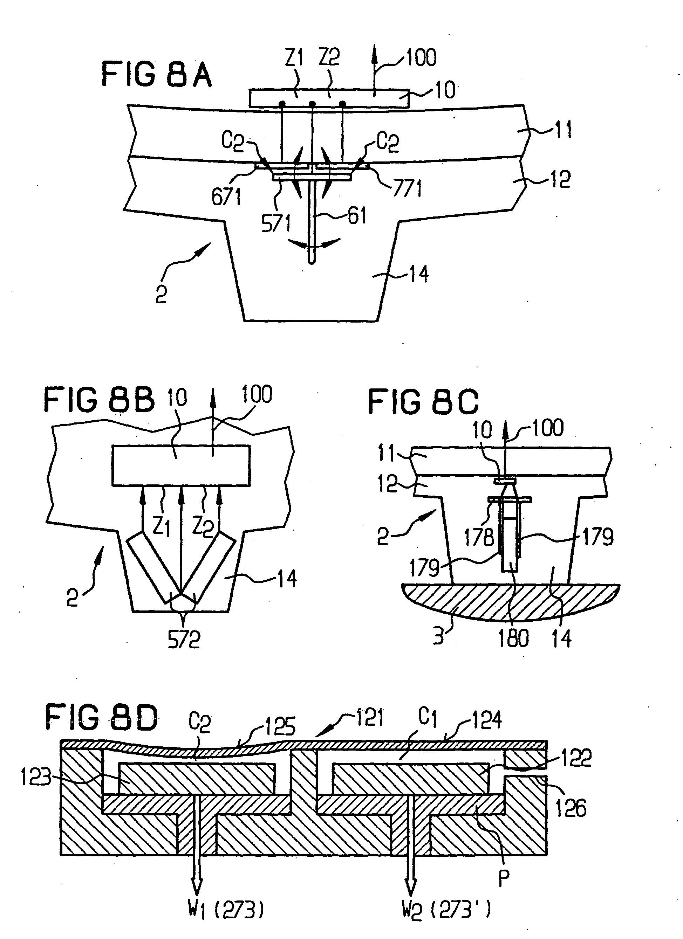

Die Verformung eines Profilelements 14 kann z.B. mit einer Ausführungsform nach Figur 8a mit zwei Kapazitäten als Impedanzbelastungen des Oberflächenwellen-Funksensors 10 erfaßt werden. Dieser befindet sich in einem Gehäuse, das z.B. auf der Innenseite der Karkasse an dieser angebracht ist. Es ist eine Metallplatte 571, wie der Seitenansicht gemäß Figur 8a zu entnehmen, im Gummi des Protektors 12 bzw. des Profilelements 14 einvulkanisiert. Wie gezeigt, sind dieser Platte zwei Platten 671 und 771 gegenüberstehend angeordnet. Letztere bilden mit der Platte 571 eine erste und eine zweite kapazitive Impedanz Z1, Z2. Diese beiden Impedanzen sind als Impedanzen 73 und 73' am Sensor 10 anzuschließen. Eine infolge einer Verformung des Protektor-/Profilelementgummis eintretende Verlagerung der Position der Platte 571 gegenüber der jeweiligen der Platten 671, 771 führt zu entsprechenden, im Regelfall unterschiedlichen Veränderungen der Impedanzen Z1 und Z2, die mit dem Funksensor erfaßt und auf dem Funkweg an die Auswertung übertragen werden können. In entsprechender Weise kann eine Torsion des Gummis als Drehwinkel erfaßt werden, wozu die Platten z.B. wie noch zur Figur 9a beschrieben ausgeführt sein können.

Anstelle einer kapazitiven Meßwerterfassung ist auch eine resistive mit leitfähigen Bereichen im Gummi vorsehbar, die infolge einer Profilverformung gedehnt oder gestaucht werden und dabei unterschiedlichen elektrischen Widerstand ergeben können. Die Figur 8b zeigt eine Schemadarstellung zu einer solchen Ausführungsform, bei der elektrisch leitfähige Bereiche im Gummi des Protektors mit 572 bezeichnet sind.

Mit Hilfe eines wie in Figur 7 beschriebenen impedanzbelasteten Sensors kann mit entsprechendem konstruktivem Aufbau z.B. auch der Reifenverschleiß in einfacher Weise überwacht werden. Die Figur 8c zeigt dem Schema nach eine solche Ausführungsform. Mit 178 ist eine im Gummi einvulkanisierte Halterungsplatte bezeichnet. An ihr sind zwei hier in Seitenansicht dargestellte Elektroden 179 angebracht, zwischen denen ein elektrisch resistives Material 180 elektrisch kontaktiert angeordnet ist. Diese Ausführung ist eine elektrische Impedanz mit Anschlüssen, die mit der Wandlerstruktur 172 eines Sensors nach Figur 7 verbunden werden. Die Elektroden 179 können Metallstreifen, z.B. Stanniolbändchen, sein. Das resistive Material kann eine Widerstandsmasse sein, die z.B. nur bis zur zulässigen Abnützung des Profils reicht. Mit zunehmender Abnutzung des Profilelements 14 verbraucht sich dieser Impedanzkörper, er wird kleiner und sein elektrischer Impedanzwert verändert sich. Diese im Lauf der Zeit eintretende Widerstandserhöhung kann mit dem daran angeschlossenen Sensor erfaßt werden und das Meßsignal (ebenso wie die gemessenen Kraftgrößen) auf dem Funkweg an die Auswertung übertragen werden. Das Auslesen dieses Sensors mit Gleichstrom, wie zur Figur 7 beschrieben, ist vorteilhaft.

Die Figur 8d zeigt den Aufbau einer temperatur- und beschleunigungskompensierten Doppelmeßdose 121 für Gasdruck. Deren einzelne Anteile bestehen aus je einem Volumen und je einer elastischen Membran 124, 125. Die Wandlerkapazitäten C1, C2 bilden leitende, von gegenüber der Dose elektrisch isolierte, in der Dose fest montierte Scheiben 122, 123, die geringen Abstand zur Membran haben. Wird die Membran 125 durch den Gasdruck elastisch eingedrückt, so steigt die Wandlerkapazität. Die eine der beiden Meßdosen ist hermetisch abgeschlossen und mit einem Gas bestimmten Drucks gefüllt. Die andere Dose hat einen Druckausgleich 126 mittels einer Bohrung. Wird zur Auswertung die Differenz der Kapazitäten C1 und C2 herangezogen, so werden die für die beiden Dosen gleichen thermischen Ausdehnungen kompensiert. Die thermisch hervorgerufene Druckänderung des Gases in der Meßdose ist durch ihre Evakuierung beherrschbar. Das für die Doppelmeßdose anzuwendende kompensierende Differenzmeßverfahren kann für viele symmetrische Anwendungen benutzt werden.

Über die Leitungen 127 und 128 sind die Kapazitäten C1 und C2 mit einem jeweiligen Wandler 172 zu verbinden, um dort als Impedanzbelastung des Funksensors vorzuliegen. Diese Leitungen können auch mit den Wandlern zweier verschiedener Spuren W1 und W2 eines Funksensors mit einem Oberflächenwellen-Element nach Figur 7a verbunden sein.

Die Figur 9 zeigt eine Anwendung der Erfindung bei einem mechanisch-konstruktiven Aufbau des Standes der Technik. Mit 61 ist ein Stift bezeichnet, der mit einem Drehpunkt in der Karkasse 11 oder in einer Metallplatte 62 geführt ist. Der zugehörige Aufbau 63, der sich im Reifeninneren befindet, ist so ausgeführt, daß zusammen mit dem Stift 61 sich eine Biegebelastung des - anstelle der im Stand der Technik vorgesehenen Hall-Generatoren - dort vorgesehenen Oberflächenwellen-Element-Sensoren 10 ergibt. Es findet hier eine direkte Messung mittels des Oberflächenwellen-Bauteils des Funksensors statt.

Für die dem konstruktiven Aufbau nach bekannten Anordnung gibt es wegen der erfindungsgemäßen Ausrüstung mit Funksensoren 10 keine Probleme bezüglich des erfindungsgemäßen Betriebs und der Signalübertragung auf dem Funkweg.

Bei der Ausführung nach Figur 9 tritt ein Effekt einer mechanischen Übersetzung auf. Ähnliches kann auch bei einer Ausführungsform nach einer der Figuren 5a bis 5d vorgesehen sein, wie dies in diesen Figuren schon dargestellt ist. Die dort vorgesehenen Kraftübertragungsbleche oder -stifte 31 bzw. 32 dienen dazu, eine über eine größere Fläche hinweg integrierte Kraftwirkung aufzunehmen und auf das Gehäuse des Sensors 10 bzw. das Substratplättchen desselben zur schon beschriebenen Kraftmessung zu übertragen. Insbesondere das Kraftübertragungsblech 32 ist dazu geeignet, Kräfte mit Transformationseffekt auf den eigentlichen Sensor 10 übertragen zu können.

Die Figur 10 zeigt eine der Figur 9 ähnliche Ausführungsform mit jedoch indirekter Messung über Impedanzen. Die Figur 10a zeigt in Aufsicht (Schnitt VI-VI) eine Aufteilung von Kondensatoren C1 bis C3, mit der Platte 160 als Gegenelektrode. Diese Platte ist mit dem Stift 61 verbunden und entsprechend der Verformung des Profilelements 14 zusammen mit einer erzwungenen Schwenkbewegung des Stiftes schwenkbar gelagert. Die Kapazitäten C1 bis C3 ändern sich je nach Maß und Richtung der Verschwenkung des Stiftes.

Die Figur 10 zeigt ein Beispiel einer Ausführungsform, bei der vorgesehen ist, verschiedene physikalische Größen des Reifens zu messen, hier die Profilverformung für den Kraftschluß, den Reifendruck und die Reifenabnutzung, und diese Meßwerte mit ein und demselben Funksensor auf dem Funkwege in die Abfrageeinheit zu übertragen. In Figur 10 ist die Anbringung eines (Reifenluft-)Druckmessers P, z.B. nach Figur 8d, am Gehäuse G gezeigt, in dem sich der Funksensor 10 befindet. Mit 100 ist wieder die Antenne des Funksensors angedeutet. Mit R ist in Figur 10 ein Reifenverschleißsensor nach Figur 8c wiedergegeben, der ebenfalls mit dem Funksensor 10 im Gehäuse G verbunden ist. Insoweit zeigt die Figur 10 einen integralen Aufbau von mehreren meßwert-sensitiven Elementen mit dazu einem gemeinsamen Funksensot 10.

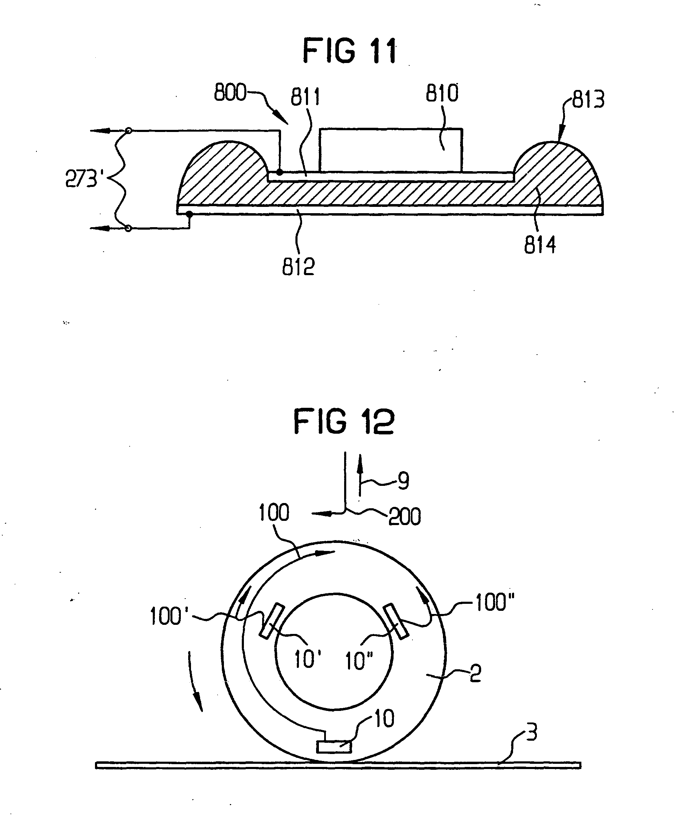

Die Figur 11 zeigt eine Vorrichtung 800 zur Messung von Schwingungen, wobei wiederum ein impedanzbelasteterFunksensor Anwendung findet. Diese umfaßt eine seismische Masse 810, die an einer Platte 811 angebracht ist. Mit 812 ist eine der Platte 811 im Abstand gegenüberstehende Platte bezeichnet. Mit einer Gummimembran 813 ist der Raum zwischen diesen beiden Platten 811, 812 abgeschlossen. Dieser abgeschlossene Raum ist mit einem gelartigen Dielektrikum 814 gefüllt. Treten auf diese Vorrichtung nach Figur 11 einwirkende Schwingungen auf, so führt die Masse 810 eine entsprechende Schwingungsbewegung aus, die zu Abstandsänderungen zwischen den Platten 811 und 812 führt. Diese Platten 811 und 812 sind als Kondensator wirksam und angeschlossen. Die sich ändernde Kapazität gibt Frequenz und Amplitude der auftretenden Schwingung wieder. Diese Kapazitätsänderung wird als meß-sensitive Impedanzgröße als Impedanzbelastung auf das Oberflächenwellen-Bauelement nach Figur 7 gegeben, wie dies auch schon zu den anderen Zusatz-Meßeinrichtungen des Funksensors 10 für indirekte Messung beschrieben ist.

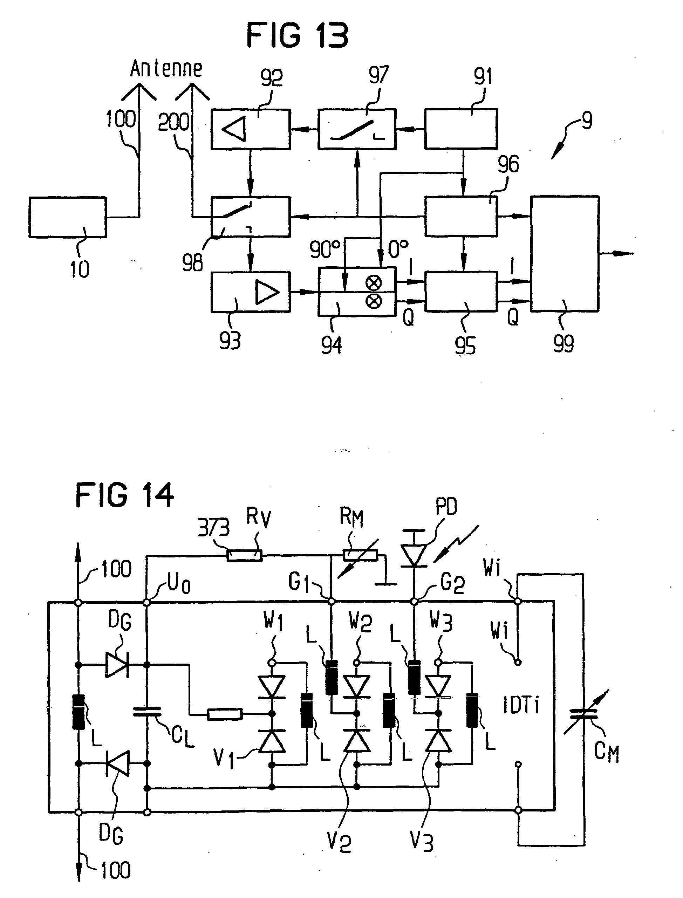

Die Figur 12 zeigt eine Anordnung, bei der eine niedrige Reichweite der Funkverbindung vorteilhaft zur Trennung von verschiedenen Sensoren dient, die im Reifen wie dargestellt angeordnet sind. Der Sensor 10 dient z.B. zur wie beschriebenen Erfassung des Kraftschlusses. Der Sensor 10' sei zur Messung von Druck und/oder Temperatur vorgesehen. Der Sensor 10'' sei ein wie zur Figur 11 beschriebener Schwingungssensor. Jeder dieser Sensoren hat eine eigene Antenne 100, 100', 100''. Bei wie mit dem Pfeil angegebenem Umlauf des Rades mit dem Reifen 2 kommt nacheinander eine jede der Antennen in die Nähe der Abfrageantenne 200, die zu der in Figur 13 beschriebenen Abfrageeinheit 9 führt.

Nachfolgend seien noch einige allgemeine Bemerkungen angebracht, die dem Fachmann für praktische Ausführungen der Erfindung und insbesondere der hier dargestellten Beispiele der Erfindung, nützlich sein können. Es ist bekannt, daß der Kraftfluß zwischen Reifen und Fahrbahn vollständig durch die augenblickliche Auflagefläche des Reifens (Reifenlatsch) auf der Fahrbahn gehen muß. Der Kraftfluß ist also ein Integral über die Kraftübertragung aller momentanen Auflagepunkte des Reifens. Mit der Erfindung können, offensichtlich anders als beim oben beschriebenen Stand der Technik, also der Gesamtkraftfluß des Reifenlatschs, genauer erfaßt werden, und zwar dies auch bei kleinflächigen Profilelementen, d.h. bei einem feinprofilierten Reifen, obwohl parallel viele benachbarte Profilelemente augenblicklich auf der Fahrbahn aufliegen. Lokale Straßenunebenheiten (Erhöhungen, Vertiefungen, deren Neigung zum Profilelement usw.), lokale Feuchte, Sandkörner oder ähnliches führen daher bei der Erfindung nicht zu Meßwertfehlern.

Wie gesagt, beruht dieser Vorteil der Erfindung darauf, daß der hier verwendete ausgewählte Sensortyp, nämlich z.B. das Oberflächenwellen-Element, so empfindlich ist, daß der Sensor auch nahe bzw. im Bereich der Karkasse angeordnet sein kann, wo die erwähnte integrale Wirkung aus der Auflage des Reifens auf der Fahrbahn speziell nach dem Prinzip der Erfindung meßbar ist. Die bei der Erfindung genutzte Idee, daß der Kraftschluß aller aktiven, d.h. augenblicklich kraftübertragenden Profilelemente des Reifenlatsches sich in den Bereich der Karkasse hinein transformieren, ergibt ein Meßergebnis, das wenig vom Zufall beeinflußt ist und Auftreten einer Verringerung der Reifenhaftung auf der Straße messen und signalisieren kann. Dabei ist davon ausgegangen, daß die einzelnen Drähte z.B. eines Stahlgürtels des Reifens im Gummi nicht rutschen. Dies kann im übrigen auch durch entsprechende Oberflächengestaltung der Drähte (siehe Eisen im Stahlbeton) verbessert werden. Die Gummischicht zwischen den Profilelementen (Verformungswege typisch kleiner/gleich 1 mm) und dem wenig elastischen Stahlgürtel der Karkasse (Dehnung im µm-Bereich) wirkt hier wie ein großflächiger Transformationskörper in der Größe der augenblicklichen Reifenauflagefläche. Bei der Erfindung kann also ein relativ kleinflächiger Sensor, wie dies die funkauslesbaren Oberflächenwellen-Sensoren sind, relativ dicht oder direkt im Bereich der Karkasse bzw. des Stahlgürtels den Kraftschluß messen, der dagegen wesentlich großflächiger über die Berührungsfläche zwischen Reifen und Fahrbahn verteilt auftritt.

Bei den vorangehenden Ausführungen ist immer von einem Reifen (des Fahrzeugs) gesprochen worden. Zweckmäßig kann es sein, entsprechend der Erfindung Sensoren an den Reifen aller vier Räder des Fahrzeugs vorzusehen. Für jedes Rad bzw. dessen Reifen wird dazu im jeweiligen Radhaus eine eigene Abfrageantenne 100 mit Zuleitung zu einem gemeinsamen Auswertegerät vorgesehen. Bei nur einem vorhandenen Abfragegeräte kann eine zeitlich nacheinander erfolgende Abfrage der Reifen der einzelnen Räder vorgesehen sein. Werden besonders ausgewählte Sensoren für die einzelnen Reifen aufgewendet, z.B. zeitlich orthogonale oder frequenzorthogonale Sensoren, so können alle Sensoren auch gleichzeitig und ggfs. auch von nur einer gemeinsamen Antenne aus abgefragt werden.

Es sei darauf hingewiesen, daß im Regelfall die für ein erfindungsgemäßes System verwendeten Leitungen abgeschirmte Leitungen oder Twisted-Pair-Kabel sein sollten, damit eingestreute Störungen des Systems der Erfindung vermieden sind.

Es seien hier nachfolgend noch einige Angaben zu den bei der Erfindung verwendeten Funksensoren als Sensoren 10 der Erfindung gemacht. Ein Funksensor als akustischer Oberflächenwellen-Sensor besteht aus einem piezoelektrischen Substrat, auf dessen (einer) Oberfläche metallische Elektrodenstrukturen, vorzugsweise in der Art interdigitaler Strukturen, aufgebracht sind. Durch Anregung mit einem hochfrequenten elektrischen Signal werden in der Oberfläche des Substrats akustische Wellen erzeugt. Diese Wellen breiten sich in der Oberfläche aus, werden durch spezielle metallische Strukturen verändert, reflektiert usw. Als Laufzeitsensoren ausgebildete Oberflächenwellen-Sensoren antworten auf eine hochfrequente Impulsanregung mit einem Antwortsignal, in dem die serielle Kennung ihrer Elektrodenstrukturen enthalten ist. Lediglich der Vollständigkeit halber sei darauf hingewiesen, daß solche für die Erfindung zu verwendenden Funksensoren auch mit Volumenwellen, magnetostatischen Wellen und dgl. arbeiten können, die hier in den Begriff Oberflächenwelle eingeschlossen sein sollen. Eine mechanische Beeinflussung eines Laufzeitsensors durch die zu messende Größe verursacht je nach Aufbauprinzip desselben eine Veränderung der Ausbreitungsgeschwindigkeit und Dämpfung des verwendeten Wellentyps und damit Zeitpunkt, Amplitude und Phasenlige der reflektierten Signale. Ein System zur Fernabfrage eines Laufzeitsensors muß somit neben einer Einrichtung zum Anregen vor allem eine Vorrichtung zum Messen von Laufzeiten, Amplituden und Phasenlagen enthalten. Eine andere Spezies für die Erfindung in Frage kommender Oberflächenwellen-Sensorelemente sind resonante Sensorelemente. Wie bei drahtlosen Mikrowellenresonator-Erkennungssystemen wird dabei ein Resonator einem hochfrequenten Funkfeld ausgesetzt. Anders als beim Mikrowellenresonator jedoch wird bei resonanten Funksensoren nicht die Absorption bei der Resonanzfrequenz gemessen. Besitzen die verwendeten resonanten Strukturen eine hinreichend hohe Güte und haben somit eine durchaus resultierende lange Ausschwingzeit, so werden die resonanten Funksensoren mit Energie im Bereich der Resonanzfrequenz gepumpt. Das beim Ausschwingen über die Antenne abgestrahlte Signale kann dadurch gemessen und zur Auswertung herangezogen werden. Als resonante Strukturen eignen sich z.B. hervorragend die Oberflächenwellenresonatoren aber auch Volumenschwinger und andere resonierende Strukturen hoher Güte. Eine Beeinflussung eines resonanten Funksensors, insbesondere eines Oberflächenwellen-Resonators, durch die zu messende Größe, verursacht eine Veränderung der Resonanzfrequenz und damit der Frequenz des während des Ausschwingens abgestrahlten Hochfrequenzsignals. Ein System zur Fernabfrage eines resonanten Funksensors muß somit neben einer Einrichtung zum Anregen vor allem eine Vorrichtung zum Messen der Frequenz enthalten.

Liegt die Resonanzfrequenz eines resonanten Funksensors (z.B. eines Volumenschwingers) derart niedrig, daß eine Antenne für diese Frequenz zu große Dimensionen bedingen würde, kann eine zusätzliche Mischung am Sensor vorteilhaft sein. In diesem Falle wird ein Hochfrequenzträger verwendet, der eine einfachere Antennenkonstruktion erlaubt. Dieser Träger wird nun im Abfragesystem mit der gewünschten Resonanzfrequenz moduliert. Der Sensor enthält nun zwischen der Antenne und Resonantenelement ein nicht-lineares passives Bauteil, das die Differenzfrequenz erzeugt. Ein solches Bauteil ist z.B. eine Diode. Mit dieser Differenzfrequenz wird das resonante Element (z.B. der Volumenschwinger) gespeist. Zum Auslesen des Funksensors wird am Sender die Modulation abgeschaltet, der Träger jedoch weiter gesendet. Das Sensorsignal moduliert in diesem Falle am nicht-linearen Bauteil (z.B. der Diode) den Träger. Dieses modulierte Signal wird vom Abfragesystem empfangen und ausgewertet.

Wie auch aus den vorangehenden Ausführungen hervorgeht, ist für die Erfindung zum drahtlosen Auslesen dieser Funksensoren (jeweils) eine Abfrageeinheit notwendig. Diese Abfrageeinheit(en) ist/sind sowohl von der Funktion als auch vom Aufbau her einem RADAR ähnlich. Für die Erfindung können dementsprechend praktisch alle im Stand der Technik bekannten Realisierungen eines Radars zum Fernauslesen eines Funksensors verwendet werden. Dies kann ein Puls-Radar, ein FMCW-Radar, ein Pulskompressions-Radar, eine direkte Zeitmessung wie TDC oder dgl. sein. Es können auch im Frequenzbereich arbeitende Systeme (wie z.B. Netzwerkanalysatoren) benutzt werden. Zwischenformen sind ebenso für die Erfindung verwendbar.

Nachfolgend sei die Figur 13 beschrieben, die das System und eine für die Erfindung verwendbare Abfrageeinheit 9, die nach dem Puls-Radar-Prinzip arbeitet und im Fahrzeug angeordnet ist, zeigt. Mit 91 ist der Oszillator für das Frequenzsignal, mit 92 der Sendeverstärker, mit 93 ein rauscharmer Empfangsverstärker, mit 94 ein Phasenglied und mit 95 ein Analog-Digitalwandler bezeichnet. Ein Puls-Taktgeber 96 dient der Impulssteuerung. Mit 97 und 98 sind Schalterstufen bezeichnet. Die Antenne 200 ist mit der Abfrageeinheit 9 verbunden. Mit 100 ist die Antenne des Sensors 10 bezeichnet, der sich im Reifen befindet. Der Mikrocontroller 99 dient der Informationsausgabe.

Es ist bereits oben darauf hingewiesen worden, für die eingesetzten Funksensoren eine Antenne 100 vorzusehen. Es kann jeder einzelne Sensor eine eigene Antenne 100 haben. Es können auch mehrere Sensoren eines Reifens eine gemeinsame Antenne zugeordnet haben. Die im Fahrzeug anzubringende Abfrageantenne 200 ist vorzugsweise im jeweiligen Radhaus des jeweiligen Rades angeordnet. An sich haben die Funksensoren eine (wie oben schon erwähnte) relativ hohe Reichweite, so daß die Positionierung der Antenne 200 relativ problemlos ist. Liegt jedoch eine nur geringe Reichweite der Funksensoren vor, kann diese, dann zum Vorteil, auch zum voneinander getrennten Signalempfang mehrerer Sensoren ein und desselben Reifens genutzt werden.

Die Anwendung des RADAR-Prinzips nach Figur 13 verlangt in vielen Fällen induktivitäts- und kopplungsarme Aufbauten, Schirmungen und z.B. für Übergänge auch Symmetrierglieder. Nachfolgend wird mit der Figur 14 eine Schaltung beschrieben, mit der für langsame Signale diese Notwendigkeit entfällt. Die Figur 14 zeigt einen hybriden Aufbau, z.B. in Flipchip-Technologie. Diese Schaltung ist auf mit Gleichstrom zu betreibende oder einen solchen liefernde Meßwandler zugeschnitten. Für die schon weiter oben beschriebene Gleichrichtung der Antennenspannung dienen die Gleichrichterdioden D_{G}. Zur Glättung bzw. Spannungsspeicherung ist der Ladekondensator C_{L} vorgesehen. Diese Kondensatorspannung wird an eine Ausgangsklemme U₀ geführt und wird im Oberflächenwellen-Bauelement am jeweiligen der für den Anschluß der Lastimpedanzen vorgesehenen reflektierenden Wandler gemessen. Die Messung der Gleichspannungen an den Wandlern erfolgt durch von den Gleichspannungen hervorgerufene Kapazitätsänderungen der Varakterdioden V1, V2, die die Lastimpedanzen der Wandler der Oberflächenwellen-Bauelemente bei der Betriebsfrequenz sind. Die Varakterdioden sind linearisiert, d.h. für Gleichspannungen in Sperrichtung parallel und für die Betriebsfrequenz in Serie geschaltet. Um ohne Wechselstrombelastung des Wandlers beide Dioden für niedrige Frequenzen einseitig an Masse zu legen, ist eine zum Wandler parallelliegende Induktivität L vorgesehen. Es kann dies auch ein parallelliegender hochohmiger Widerstand sein. Zur Trennung der Betriebsfrequenz von den Gleichspannungs-Meßeingängen G1, G2 ist ebenfalls eine Induktivität L bzw. ein hochohmiger Widerstand vorgesehen. Mit R_{M} ist in Figur 14 der einseitig an Masse liegende Widerstand als meß-sensitive Impedanz bezeichnet. Zusammen mit dem Widerstand Rv bildet er einen Spannungsteiler, wie auch schon zur Figur 7 beschrieben.

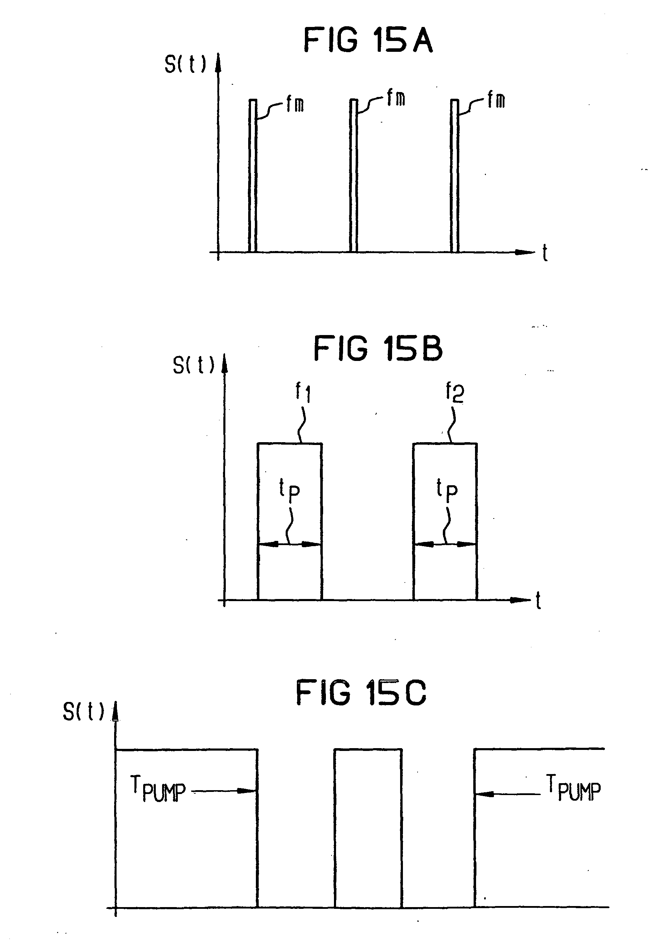

Die Figur 15 zeigt für eine Schaltung nach Figur 14 geeignete Burst-Impulsformen als Abfrageimpulse. Die Figur 15a zeigt kurze breitbandige Impulse mit der Mittenfrequenz fₘ . Für Gleichspannungsquellen nach Figur 14 müssen diese Impulse große Leistung haben.

Die Figur 15b zeigt längere, schmalbandigere Burstimpulse für Abfrage bei verschiedenen Frequenzen fi innerhalb des Frequenzbereichs des Oberflächenwellen-Bauelements. Die Länge dieser Impulse ist jedoch begrenzt mit der Abklingzeit der Reflexion, d.h. der doppelten größten Laufzeit der Verzögerungselemente. Daraus ergibt sich auch der minimale Abstand zwischen aufeinanderfolgenden Abfrageimpulsen für Impulsform-Auswertung.

Die Figur 15c zeigt lange Pumpimpulse, zusätzlich zu den Abfrageimpulsen, nämlich zur Aufladung des Speicherkondensators C_{L} nach Figur 14. Zusätzlich zum Pumpimpuls sind noch die Meßimpulse nach Figur 15a oder 15b für die Impulsauswertung vorzusehen. Eine Auswertung durch schrittweise Frequenzänderung der Pumpimpulse ist dann durchführbar, wenn genügend Frequenzmesspunkte im Zeitintervall stationärer Wandler- und Funkkanalparameter zu gewinnen sind. Für schnelle Vorgänge muß jedenfalls das Schema der Pumpimpulse mit nachfolgendem Meßimpuls nach Figur 15c angewendet und der minimale Zeitabstand des Abklingens eingehalten werden.

## Patentansprüche

1. Sensorsystem für den Kraftschluß eines Fahrzeugreifens mit der Fahrbahn mit:
einer Funk-Abfrageeinheit (9) mit einer Antenne (200) für auszusendende Hochfrequenz-Abfrageimpulse und Empfang der Antwortsignale und
einem im Fahrzeugreifen eingebauten Funksensor (10) mit einer Antenne (100),
wobei der Funksensor (10) ein Oberflächenwellen-Bauelement (70) zum Speichern der Energie eines jeweiligen Abfrageimpulses und zum Abgeben von einem zugehörigen Antwortsignal auf diesen Abfrageimpuls mit einer zeitlichen Verzögerung, die ein vom Abfrageimpuls ungestörtes Empfangen und Verarbeiten ein in dem zugehörigen Antwortsignal enthaltenen Sensorsignals zu einem Messergebnis sichert, aufweist und wobei die Impedanz des Oberflächenwellen-Bauelement (70) mit einer Messwert-sensitiven Impedanz (73) zum Erzeugen des Sensorsignals in dem Antwortsignal belastet ist.

2. Sensorsystem nach Anspruch 1 mit einer Abfrageeinheit (9) mit einem Aufbau nach Art eines RADAR.

3. Sensorsystem nach einem der Ansprüche 1 oder 2 mit einem Netzwerkanalysator als Abfrageeinheit (9).

4. Sensorsystem nach Anspruch 1, wobei der Funksensor mit einem impedanzbelastbaren Oberflächenwellen-Bauelement (70) und mit einer für das Anschließen (172') einer jeweiligen Impedanz (73') vorgesehenen Schaltung
mit einer Gleichrichterschaltung mit Ladekondensator (370, C_{L}) für der Antenne (100) zu entnehmender Gleichspannung,
mit einem Spannungsteiler, bestehend aus einem Widerstand (371) und der meßwert-sensitiven Impedanz (373) und
mit einer Schaltung aus einer Induktivität (372) und einer antiparallelen Schaltung von Varakterdioden (V1,V2) ausgerüstet ist, die bezogen auf die Mittelanzapfung der Induktivität und die Mittelanzapfung zwischen den zwei Varakterdioden der meßwert-sensitiven Impedanz (373) parallelgeschaltet sind, wobei die äußeren Anschlüsse der Induktivität und der Varakterdioden-Schaltung miteinander parallelgeschaltet mit den elektrischen Anschlüssen (172') des Oberflächenwellen-Bauelements für die Impedanzbelastung verbunden sind.

5. Sensorsystem nach einem der Ansprüche 1 bis 4, wobei der Funksensor im Reifen nahe der Karkasse (11) im Bereich eines Profilelements (14) des Protektors (12) positioniert ist.

6. Sensorsystem nach einem der Ansprüche 1 bis 5, wobei der Funksensor (10) nahe der Karkasse (11) im Protektor (12) zwischen zwei benachbarten Profilelementen (14a,14b) positioniert ist.

7. Sensorsystem nach einem der Ansprüche 1 bis 6,
wobei der Funksensor (10) in oder im Bereich nahe der Karkasse (11) positioniert ist.

8. Sensorsystem nach Anspruch 7,
mit zusätzlichen Kraftverstärkungsblechen (31, 32).

9. Sensorsystem nach einem der Ansprüche 1 bis 8, wobei der Funksensor (10) tangential bezogen auf die Laufrichtung des Reifens ausgerichtet ist.

10. Sensorsystem nach einem der Ansprüche 1 bis 8, wobei die Ausrichtung des Funksensors (10) parallel zu dem Radius des Reifens ist.

11. Sensorsystem nach einem der Ansprüche 1 bis 4,
wobei der Funksensor (10) auf der Innenseite der Karkasse (11) des Reifens positioniert ist und dieser Funksensor (10) zusätzlich mit kraftübertragenden Mitteln (101, 102) ausgerüstet ist, die mindestens in die Karkasse (11) hereinreichen und die (101, 102) in deren dazwischenliegendem Bereich des Reifens auftretenden Kraftfluß auf den Funksensor (10) einwirkend auf diesen übertragen.

12. Sensorsystem nach Anspruch 11,
bei dem diese Mittel (101, 102) so positioniert sind, daß sie zwischen sich einen Bereich der Karkasse (11)/des Protektors (12) haben und in diesem Bereich auftretender Kraftfluß auf diese Mittel (101, 102) einwirkt.

13. Sensorsystem nach einem der Ansprüche 1 bis 3 mit einem Stab (61), der im Bereich der Karkasse (11) schwenkbar gelagert bis in ein Profilelement (14) hineinragt,
wobei dieser Stab an seinem in das Reifeninnere gerichteten Ende mit dem Funksensor (10), der als Biegeelemente (10', 10") ausgebildet ist, gekoppelt ist.

14. Sensorsystem nach einem der Ansprüche 1 bis 3 mit einem Stab (61), der im Bereich der Karkasse (11) schwenkbar gelagert bis in ein Profilelement (14) hineinragt,
wobei dieser Stab an seinem ins Reifeninnere gerichteten Ende mit einer Platte (160) starr verbunden ist, die schwenkbar gelagert ist und die eine Elektrode von Kondensatoren (C1 bis C3) ist, wobei die anderen dieser Platte (160) gegenüberstehenden Elektroden dieser Kondensatoren mit Anschlüssen für Impedanzbelastungen des Funksensors (10) verbunden sind.

15. Sensorsystem nach einem der Ansprüche 1 bis 3 mit Messeinrichtungen (121, R) für weitere Meßdaten des Reifens,
wobei die zu diesen Messeinrichtungen (121, R) gehörenden Mess-sensitiven Elemente ebenfalls mit diesem Funksensor (10) zur integralen Meßwertauswertung aller der abgefragten Daten verbunden sind.

16. Sensorsystem nach Anspruch 4, wobei die meßwert-sensitive Impedanz des Funksensors aufweist: eine Anordnung mit wenigstens zwei Kapazitäten, deren gemeinsame Elektrode (571) im Gummi eines Protektors schwenkbar ist und starr mit einem Stab (61) verbunden ist, der in ein Profilelement (14) hineinragt und durch eine Verformung des Profilelements (14) verschwenkbar ist, wobei ein Verschwenken der mit dem Stab (61) starr verbundenen gemeinsamen Elektrode (571) Kapazitätsveränderungen der Kapazitäten (C1 und C2) als meß-sensitive Größen (Z1, Z2) hervorruft.

17. Sensorsystem nach einem der Ansprüche 1 bis 3, wobei ein vorgesehener Verformungssensor mit im Gummi eines Profilelements (14) angeordneten druckabhängig elektrisch leitfähigen Elementen (572), die miteinander in Reihe geschaltet sind und mit ihrem gemeinsamen Mittelanschluß und ihrem jeweiligen alleinigen Anschluß als zwei Impedanzbelastungen mit dem Funksensor (10) verbunden sind.

18. Sensorsystem nach einem der Ansprüche 1 bis 3, wobei ein vorgesehener Verschleißsensor, der ein Widerstandselement (180) aufweist, das mit Elektroden (179) kontaktiert und mit den Anschlüssen (172, 172') für die Mess-sensitive Impedanz im Funksensor (10) angeschlossen ist, wobei das Widerstandselement (180) im Profilelement (14) so positioniert ist, daß es mit Abrieb des Profilelements derart verkleinert wird, daß der zwischen den Elektroden (179) auftretende elektrische Widerstand ansteigt.

19. Sensorsystem nach einem der Ansprüche 1 bis 3, wobei ein vorgesehener Schwingungssensor mit einer seismischen Masse (810), die mit einer Platte (811) verbunden ist, die die eine Elektrode eines aus zwei Elektroden bestehenden Kondensators ist, wobei zwischen diesen beiden Platten (811/812) in einem elastisch (813) abgeschlossenen Volumen ein gelartiges Dielektrikum (814) vorgesehen ist, wobei die elektrischen Anschlüsse dieser beiden als Kondensator wirkenden Platten mit dem Anschluß (172, 172') für die Impedanzbelastung des Funksensors (10) verbunden sind.

## Claims

1. Sensor system for the adhesion of a vehicle tyre to the roadway having:
a radio interrogation unit (9) having an antenna (200) for radio-frequency interrogation pulses to be transmitted and the reception of the response signals, and
a radio sensor (10) incorporated in the vehicle tyre and having an antenna (100),
in which case the radio sensor (10) has a surface acoustic wave component (70) for storing the energy of a respective interrogation pulse and for outputting an associated response signal in response to this interrogation pulse with a time delay that ensures that a sensor signal contained in the associated response signal is received in a manner undisturbed by the interrogation pulse and is processed to form a measurement result, and
in which case the impedance of the surface acoustic wave component (70) is loaded with a measured-value-sensitive impedance (73) for generating the sensor signal in the response signal.

2. Sensor system according to Claim 1 having an interrogation unit (9) constructed like a RADAR.

3. Sensor system according to either of Claims 1 and 2 having a network analyser as the interrogation unit (9).

4. Sensor system according to Claim 1, in which case the radio sensor is equipped with an impedance-loadable surface acoustic wave component (70) and with a circuit which is provided for the connection (172') of a respective impedance (73'),
having a rectifier circuit having a charging capacitor (370, C_{L}) for DC voltage to be drawn from the antenna (100),
having a voltage divider, comprising a resistor (371) and the measured-value-sensitive impedance (373), and having a circuit formed by an inductance (372) and a back-to-back connection of varactor diodes (V1, V2), which, with respect to the centre tap of the inductance and the centre tap between the two varactor diodes, are connected in parallel with the measured-value-sensitive impedance (373), in which case the outer connections of the inductance and of the varactor diode circuit, connected in parallel with one another, are connected to the electrical connections (172') of the surface acoustic wave component for the impedance loading.

5. Sensor system according to one of Claims 1 to 4,
in which case the radio sensor is positioned in the tyre near the carcass (11) in the region of a tread element (14) of the protector (12).

6. Sensor system according to one of Claims 1 to 5,
in which case the radio sensor (10) is positioned near the carcass (11) in the protector (12) between two adjacent tread elements (14a, 14b).

7. Sensor system according to one of Claims 1 to 6,
in which case the radio sensor (10) is positioned in or in the region near the carcass (11).

8. Sensor system according to Claim 7, having additional force-amplifying plates (31, 32).

9. Sensor system according to one of Claims 1 to 8,
in which case the radio sensor (10) is oriented tangentially with respect to the running direction of the tyre.

10. Sensor system according to one of Claims 1 to 8,
in which case the orientation of the radio sensor (10) is parallel to the radius of the tyre.

11. Sensor system according to one of Claims 1 to 4,
in which case the radio sensor (10) is positioned on the inside of the carcass (11) of the tyre and said radio sensor (10) is additionally equipped with force-transmitting means (101, 102), which extend at least into the carcass (11) and which (101, 102) transmit to the radio sensor (10) force flux acting on said radio sensor, which force flux occurs in that region of the tyre which lies between said force-transmitting means.

12. Sensor system according to Claim 11,
in which said means (101, 102) are positioned in such a way that they have between them a region of the carcass (11)/of the protector (12) and force flux occurring in this region acts on said means (101, 102).

13. Sensor system according to one of Claims 1 to 3, having a bar (61), which, mounted pivotably in the region of the carcass (11), projects right into a tread element (14),
in which case said bar is coupled, at its end directed into the interior of the tyre, to the radio sensor (10), which is designed as bending elements (10', 10").

14. Sensor system according to one of Claims 1 to 3, having a bar (61), which, mounted pivotably in the region of the carcass (11), projects right into a tread element (14),
in which case said bar is rigidly connected, at its end directed into the interior of the tyre, to a plate (160), which is mounted pivotably and which is one electrode of capacitors (C1 to C3), in which case the other electrodes of these capacitors, said electrodes being opposite to said plate (160), are connected to connections for impedance loads of the radio sensor (10).

15. Sensor system according to one of Claims 1 to 3, having measuring devices (121, R) for further measurement data of the tyre,
in which case the measurement-sensitive elements belonging to said measuring devices (121, R) are likewise connected to said radio sensor (10) for integral measured-value evaluation of all the interrogated data.

16. Sensor system according to Claim 4, in which case the measured-value-sensitive impedance of the radio sensor has: an arrangement having at least two capacitances, whose common electrode (571) is pivotable in the rubber of a protector and is rigidly connected to a bar (61) which projects into a tread element (14) and can be pivoted by a deformation of the tread element (14), in which case capacitance changes in the capacitances (C1 and C2) as measurement-sensitive variables (Z1, Z2) are caused by a pivoting of the common electrode (571) which is rigidly connected to the bar (61).

17. Sensor system according to one of Claims 1 to 3, in which case a provided deformation sensor is equipped with elements (572), which are arranged in the rubber of a tread element (14), are electrically conductive in a pressure-dependent manner, are connected in series with one another and are connected to the radio sensor (10) by their common centre connection and their respective solitary connection as two impedance loads.

18. Sensor system according to one of Claims 1 to 3, in which case a provided wear sensor has a resistance element (180) which makes contact with electrodes (179) and is connected with the connections (172, 172') for the measurement-sensitive impedance in the radio sensor (10), in which case the resistance element (180) is positioned in the tread element (14) in such a way that it is reduced in size with abrasion of the tread element such that the electrical resistance occurring between the electrodes (179) rises.

19. Sensor system according to one of Claims 1 to 3, in which case a provided vibration sensor is equipped with a seismic mass (810) connected to a plate (811), which is one electrode of a capacitor comprising two electrodes, a gel-like dielectric (814) being provided between these two plates (811, 812) in an elastically (813) sealed volume, the electrical connections of these two plates acting as a capacitor being connected to the connection (172, 172') for the impedance loading of the radio sensor (10).

## Revendications

1. Système de capteur pour l'adhérence d'un pneu de véhicule sur la chaussée, comprenant :
une unité d'interrogation radio (9) avec une antenne (200) pour l'émission d'impulsions d'interrogation à hautes fréquences et la réception des signaux de réponse, et
un capteur radio (10) incorporé au pneu du véhicule avec une antenne (100),
dans lequel le capteur radio (10) présente un composant à onde de surface (70) pour enregistrer l'énergie d'une impulsion d'interrogation respective et pour émettre un signal de réponse correspondant répondant à cette impulsion d'interrogation avec un retard temporel garantissant à l'impulsion d'interrogation une réception et un traitement, sans perturbation, d'un signal de capteur contenu dans le signal de réponse correspondant pour l'obtention d'un résultat de mesure, et dans lequel l'impédance du composant à onde de surface (70) présente une charge d'impédance (73) sensible à la valeur de mesure pour générer le signal de capteur contenu dans le signal de réponse.

2. Système de capteur selon la revendication 1, comprenant une unité d'interrogation (9) avec une structure du type radar.

3. Système de capteur selon l'une quelconque des revendications 1 ou 2, avec un analyseur de réseau comme unité d'interrogation (9).

4. Système de capteur selon la revendication 1, dans lequel
le capteur radio est équipé d'un composant à onde de surface (70) pouvant supporter une charge d'impédance et d'un circuit prévu pour la connexion (172') d'une impédance respective (73'),
d'un circuit redresseur avec condensateur de charge (370, C_{L}) pour la tension continue à prélever de l'antenne (100),
d'un diviseur de tension constitué d'une résistance (371) et de l'impédance (373) sensible à la valeur de mesure, et
d'un circuit formé d'une inductance (372) et d'un circuit antiparallèle de diodes varactor (V1, V2), qui sont commutées en parallèle par rapport à la prise médiane de l'inductance et à la prise médiane, située entre les deux diodes varactor, de l'impédance (373) sensible à la valeur de mesure, dans lequel les connexions externes de l'inductance et du circuit de diodes varactor sont connectées en parallèle aux connexions électriques (172') du composant à onde de surface pour la charge d'impédance.

5. Système de capteur selon l'une quelconque des revendications 1 à 4,
dans lequel le capteur radio est positionné, au sein du pneu, à proximité de la carcasse (11) dans la zone d'un élément profilé (14) de la chape (12) du pneu.

6. Système de capteur selon l'une quelconque des revendications 1 à 5,
dans lequel le capteur radio (10) est positionné près de la carcasse (11), dans la chape (12) du pneu, entre deux éléments profilés (14a, 14b) voisins.

7. Système de capteur selon l'une quelconque des revendications 1 à 6,
dans lequel le capteur radio (10) est positionné à l'intérieur de la carcasse ou dans la zone proche de la carcasse (11).

8. Système de capteur selon la revendication 7,
équipé de tôles d'amplification de puissance (31, 32) supplémentaires.

9. Système de capteur selon l'une quelconque des revendications 1 à 8,
dans lequel le capteur radio (10) est orienté tangentiellement dans le sens de roulement du pneu.

10. Système de capteur selon l'une quelconque des revendications 1 à 8, dans lequel l'orientation du capteur radio (10) est parallèle au rayon du pneu.

11. Système de capteur selon l'une quelconque des revendications 1 à 4,
dans lequel le capteur radio (10) est positionné sur la face interne de la carcasse (11) du pneu et ce capteur radio (10) est équipé en outre de moyens de transmission de puissance (101, 102), qui vont au moins jusqu'à l'intérieur de la carcasse (11) et qui transmettent le flux de puissance se présentant dans la zone du pneu située entre eux sur le capteur radio (10) en agissant sur celui-ci.

12. Système de capteur selon la revendication 11,
dans lequel ces moyens (101, 102) sont positionnés de sorte qu'une zone de la carcasse (11) ou de la chape (12) du pneu se situe entre eux et que le flux de puissance se présentant dans cette zone agisse sur ces moyens (101, 102).

13. Système de capteur selon l'une quelconque des revendications 1 à 3, avec une tige (61) qui, positionnée pivotante dans la zone de la carcasse (11), s'y avance jusque dans un élément profilé (14),
dans lequel cette tige est couplée, au niveau de son extrémité orientée vers l'intérieur du pneu, au capteur radio (10) qui se présente sous la forme d'un élément de flexion (10', 10").

14. Système de capteur selon l'une quelconque des revendications 1 à 3, avec une tige (61) qui, positionnée pivotante dans la zone de la carcasse (11), s'y avance jusque dans un élément profilé (14),
dans lequel cette tige est reliée, au niveau de son extrémité orientée vers l'intérieur du pneu, de manière rigide avec une plaque (160), qui est positionnée pivotante et qui est une électrode de condensateurs (C1, C2, C3), dans lequel les autres électrodes de ces condensateurs opposées à cette plaque (160) sont reliées à des connexions pour des charges d'impédance du capteur radio (10).

15. Système de capteur selon l'une quelconque des revendications 1 à 3 avec des dispositifs de mesure (121, R) pour d'autres données de mesure du pneu,
dans lequel les éléments sensibles à la mesure appartenant à ces dispositifs de mesure (121, R) sont également reliés à ce capteur radio (10) pour exploiter intégralement les valeurs de mesure de toutes les données interrogées.

16. Système de capteur selon la revendication 4,
dans lequel l'impédance du capteur radio sensible à la valeur de mesure présente : un aménagement avec au moins deux capacités, dont l'électrode commune (571) peut pivoter dans le caoutchouc d'une chape de pneu et est reliée de manière rigide à une tige (61), qui s'avance jusque dans un élément profilé (14) et peut pivoter par le biais d'une déformation de l'élément profilé (14), dans lequel un pivotement de l'électrode commune (571) reliée de manière rigide à la tige (61) provoque des variations de capacité des capacités (C1 et C2) comme grandeurs sensibles à la mesure (Z1, Z2).

17. Système de capteur selon l'une quelconque des revendications 1 à 3,
dans lequel un capteur de déformation est prévu avec des éléments (572) électroconducteurs en fonction de la pression, disposés dans le caoutchouc d'un élément profilé (14), lesquels éléments sont connectés en série l'un à l'autre et connectés, avec leur connexion centrale commune et leur connexion individuelle respective, au capteur radio (10) sous la forme de deux charges d'impédance

18. Système de capteur selon l'une quelconque des revendications 1 à 3,
dans lequel un capteur d'usure est prévu, qui présente un élément de résistance (180), lequel est mis sous contact avec des électrodes (179) et connecté aux connexions (172, 172') pour l'impédance sensible à la mesure dans le capteur radio (10), dans lequel l'élément de résistance (180) est positionné dans l'élément profilé (14) de sorte qu'il s'amenuise tellement au contact abrasif avec l'élément profilé (14) que la résistance électrique se présentant entre les électrodes (179) augmente.

19. Système de capteur selon l'une quelconque des revendications 1 à 3,
dans lequel est prévu un capteur d'oscillation avec une masse sismique (810), qui est reliée à une plaque (811), laquelle est la première électrode d'un condensateur constitué de deux électrodes, dans lequel un diélectrique géliforme (814) est prévu entre ces deux plaques (811/812) dans un volume fermé de manière élastique et dans lequel les connexions électriques de ces deux plaques agissant comme condensateur sont connectées à la connexion (172, 172') pour la charge d'impédance du capteur radio (10).
